(19)

**Europäisches Patentamt**
**European Patent Office**
**Office européen des brevets**

(11)  **EP 4 664 367 A1**

(12)  **EUROPEAN PATENT APPLICATION**

(43) Date of publication:
**17.12.2025   Bulletin 2025/51**

(21) Application number: **25181605.4**

(22) Date of filing: **09.06.2025**

(51) International Patent Classification (IPC):
**G06N 10/70** (2022.01)    **G06N 10/40** (2022.01)
**G06N 10/20** (2022.01)

(52) Cooperative Patent Classification (CPC):
**G06N 10/70; G06N 10/20; G06N 10/40**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority:   **13.06.2024   US 202463659560 P
06.06.2025   US 202519231259**

(71) Applicant: **Xanadu Quantum Technologies Inc.
Toronto, Ontario M5G 2C8 (CA)**

(72) Inventors:
• **TZITRIN, Ilan
  Toronto, M5A 4L1 (CA)**
• **ALEXANDER, Rafael Nikolai
  Toronto, M2N 1T1 (CA)**
• **WALSHE, Blayney William
  Toronto, M6P 0C1 (CA)**
• **WEIL, Ryohei Kang
  Richmond, V7E 1M7 (CA)**
• **BARAGIOLA, Ben Quinn
  Carlton, 3053 (AU)**

(74) Representative: **Cooley (UK) LLP
22 Bishopsgate
London EC2N 4BQ (GB)**

(54)    **GKP STATES WITH ANISOTROPIC NOISE ON ARBITRARY LATTICES**

(57)    In some embodiments, a method includes receiving, at a state preparation circuit, a plurality of GKP states of light that is representable by a plurality of lattices. A transformation is applied to the plurality of GKP states to produce a plurality of aligned GKP states of light that is representable by a common non-square lattice. Two aligned GKP states of light from the plurality of aligned GKP states of light are entangled to produce a two-mode GKP cluster state. A plurality of first modes, including a first mode from the two-mode GKP cluster state, are entangled with a plurality of second modes, including a second mode from the two-mode GKP cluster state, to produce a macronodal cluster state.

**FIG. 1**

Processed by Luminess, 75001 PARIS (FR)

**Description**

*Cross-Reference to Related Applications*

This application claims priority to and the benefit of U.S. Provisional Patent Application No. 63/659,560, filed June 13, 2024 and titled "GSP States with Anisotropic Noise on Arbitrary Lattices," and also claims priority to and the benefit of U.S. Patent Application No. 19/231,259, filed June 6, 2025 and titled "GSP States with Anisotropic Noise on Arbitrary Lattices," the disclosures of each of which are incorporated herein by reference in their entireties.

*Field*

The present disclosure relates generally to the field of photonic quantum computing, and more specifically, to the generation of three-dimensional resource states that can be representable by square and/or non-square lattices.

*Background*

Breeding-based state factories can produce Gottesman-Kitaev-Preskill (GKP) states representable by lattices, such as rectangular lattices. Systems and methods are needed to accommodate such states.

*Summary*

In some embodiments, a method includes receiving, at a state preparation circuit, a plurality of Gottesman-Kitaev-Preskill (GKP) states of light that is representable by a plurality of lattices. The method also includes applying a transformation to the plurality of GKP states of light, using one or more measurement-based squeezers (optionally in combination with a first beamsplitter(s) and/or a phase shifter) that are included in the state preparation circuit, to produce a plurality of aligned GKP states of light that is representable by a common non-square lattice. Two aligned GKP states of light from the plurality of aligned GKP states of light are entangled using a second beamsplitter(s) that is included in a two-mode stitcher that is coupled to the state preparation circuit, to produce a two-mode GKP cluster state. A plurality of first modes, including a first mode from the two-mode GKP cluster state, are entangled with a plurality of second modes, including a second mode from the two-mode GKP cluster state, using a third beamsplitter(s) that is included in a macronodal stitcher that is coupled to the two-mode stitcher, to produce a macronodal cluster state.

In some embodiments, a system includes an optical circuit configured to generate a plurality of initial states of light via Gaussian boson sampling (GBS). The system also includes a state preparation circuit that includes at least one of a first beamsplitter, a measurement-based squeezer, or a phase shifter and that is configured to at least one of (1) generate a plurality of Gottesman-Kitaev-Preskill (GKP) states of light based on the plurality of initial states of light or (2) perform a Gaussian unitary transformation on the plurality of GKP states of light to align the plurality of GKP states of light to an arbitrary lattice. The system also includes a two-mode stitcher that includes a second beamsplitter and that is configured to generate a plurality of two-mode GKP cluster states based on the plurality of GKP states of light. A quantum processing unit (QPU) (1) is configured to generate a macronodal cluster state, via a third beamsplitter, based on the plurality of two-mode GKP cluster states and (2) is configured to perform a homodyne detection based on the macronodal cluster state and the arbitrary lattice.

In some embodiments, an apparatus includes an integrated circuit that (1) includes at least one of a first beamsplitter, a measurement-based squeezer, or a phase shifter and (2) is configured to at least one of (a) generate a plurality of Gottesman-Kitaev-Preskill (GKP) states of light based on a plurality of initial states of light generated via Gaussian boson sampling (GBS), or (b) perform a Gaussian unitary transformation on the plurality of GKP states of light to align the plurality of GKP states of light to an arbitrary lattice. The integrated circuit further includes a two-mode stitcher that (1) includes a second beamsplitter and (2) is configured to generate a plurality of two-mode GKP cluster states based on the plurality of GKP states of light. The two-mode stitcher is configured to send the plurality of two-mode GKP cluster states to a quantum processing unit (QPU) (1) that is configured to generate a macronodal cluster state, via a third beamsplitter, based on the plurality of two-mode GKP cluster states and (2) that is configured to perform a homodyne detection based on the macronodal cluster state and the arbitrary lattice.

In some embodiments, a method includes receiving, at a two-mode stitcher, two Gottesman-Kitaev-Preskill (GKP) states of light from a plurality of GKP states of light that is representable by a common lattice. The two GKP states of light are entangled using a plurality of beamsplitters that is included in the two-mode stitcher, to produce a two-mode GKP cluster state. The method also includes entangling (1) a plurality of first modes that includes a first mode from the two-mode GKP cluster state and (2) a plurality of second modes that includes a second mode from the two-mode GKP cluster state, using a second plurality of beamsplitters that is included in a macronodal stitcher that is coupled to the two-mode stitcher. A macronodal cluster state is produced, and this macronodal cluster state is associated with a code associated with an $X$

distance and a Z distance that are based on (1) a noise of a first quadrature that is associated with the plurality of GKP states and (2) a noise of a second quadrature that is associated with the plurality of GKP states.

## *Brief Description of the Drawings*

FIG. 1 is a schematic diagram of a photonic quantum computing architecture, according to an embodiment.

FIG. 2 is a representation of the primal unit cell of a three-dimensional (3D) macronodal cluster state, according to an embodiment.

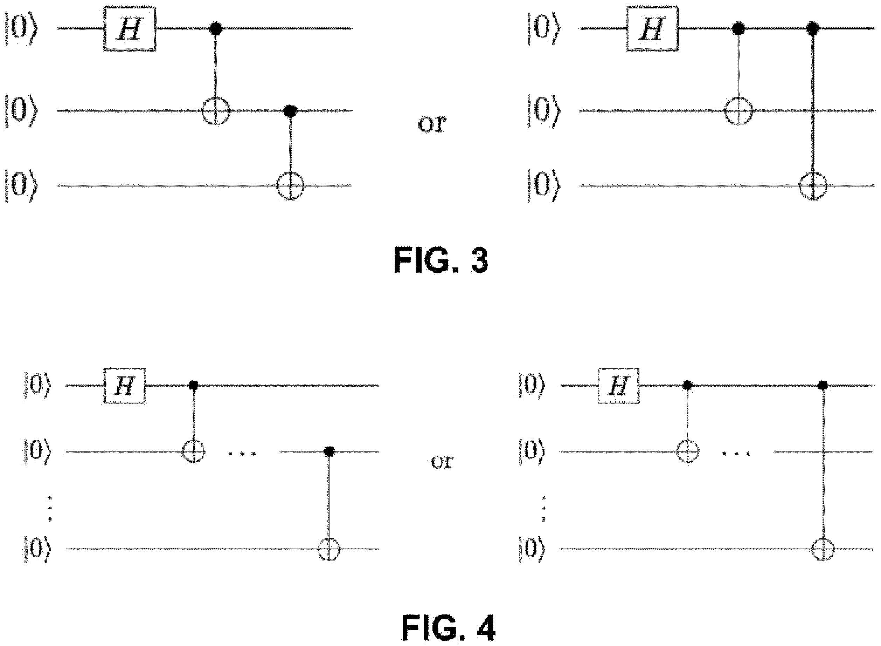

FIGS. 3-4 are schematic diagrams of circuits for generating Greenberger-Horne-Zeilinger (GHZ) states, according to an embodiment.

FIG. 5 is a representation of a general procedure for constructing qubit error-correcting code graphs, according to an embodiment.

FIG. 6 is a schematic diagram of a $2^N$-splitter, according to an embodiment.

FIG. 7 is a schematic diagram of a linear GBN, according to an embodiment.

FIG. 8 is a schematic diagram of a tree splitter for $N$ = 2, 4, and 9, where $\theta' = \arctan\left(\sqrt{8}\right)$, according to an embodiment.

FIG. 9 is a schematic diagram of a Bell pair in a GKP lattice code, according to an embodiment.

FIG. 10 is a representation of a unit phase space rhombus for square-grid GKP, according to an embodiment.

FIGS. 11-12 are representations associated with a transformation between square GKP and hexagonal GKP, according to an embodiment.

FIGS. 13-15 are representations associated with applying $\hat{U}$ to a qunaught state $|\emptyset\rangle$, according to an embodiment.

FIGS. 16-24 are schematic diagrams of circuits, according to an embodiment.

FIGS. 25-28 are representations associated with tuning bias, according to an embodiment.

FIG. 29 is a two-dimensional threshold plot, according to an embodiment.

## *Detailed Description*

### Introduction

At least some systems and methods described herein are associated with a photonic quantum computing architecture that can accommodate state factories that produce Gottesman-Kitaev-Preskill (GKP) states (1) defined on and/or representable by non-square lattices (e.g., rectangular and hexagonal) and/or (2) with noise that may be anisotropic (e.g., models for states with different qualities along different axes in phase space). At least some methods described herein also include performing fault-tolerant analysis on these photonic quantum computing architectures and/or obtaining higher-dimensional threshold plots from error correction simulations.

Dumbbell-splitter constructions, described further herein, can also be referred to as generalized passive architectures. "Inner and outer lattices," described further herein, can refer to a method of accommodating non-square GKP lattices by combining those non-square GKP lattices into a bipartite graph state lattice (e.g., that represents a bipartite graph state lattice). Anisotropic noise can refer to unequal amounts of noise along the $q$ and $p$ quadratures (and/or some other pairs of conjugate quadratures) in phase space.

GKP states can be defined on and/or representable by different lattices in phase space. Similarly stated, GKP states can be stabilized by different pairs of commuting displacement operators along two directions in phase space. The choice of GKP lattice can affect the tolerance to continuous errors along those directions, which may accrue to produce Pauli errors on the qubit. In other words, changing the single-mode GKP lattice can primarily affect the relative biases of *X, Y,* and *Z* Pauli errors.

While the GKP lattice can be tailored to better suit the qubit error correcting code, at least some systems and methods described herein act in reverse (e.g., tailoring the qubit error correcting code to the GKP lattice). A motivation for the foregoing is that the GKP code lattice degree of freedom can already be fixed to maximize the quality of the state that can be produced in state preparation factories. For example, in some proposed fault-tolerant architectures, breeding-based state factories can produce GKP states defined on rectangular lattices. If multiple high-quality GKP preparation methods with different possible lattices are found, these methods can be optimized (or improved) to suit the needs of qubit quantum error correction.

The dumbbell-splitter constructions described herein can assume that the state factory produces GKP sensor states and entangles them passively into two-mode cluster states existing in the *square* GKP encoding. Although in principle every output state can be aligned to the sensor state lattice via an inline squeezing operation, the additional noise introduced by this operation can make aligning the states to a common rectangular lattice more desirable. Therefore, an architecture should incorporate and/or accommodate rectangular GKP states.

Given that the GKP lattice structure may be set, code construction improvements are desirable to exploit biases in the noise, as this can have an effect on the threshold. The bias may come, for example, both from the choice of lattice and from a potentially different state quality along different quadratures in phase space, resulting in anisotropic noise. The change in GKP lattice will have an immediate effect on the binning functions used to convert homodyne data into measured bits. In addition, these biases should be taken into account in the decoding process.

At least some systems and methods described herein relate to fault-tolerant GKP-based architectures with passive entanglement generation (e.g., architectures that can take maximally entangled resource states - e.g., dumbbells - and create a cluster state using passive elements). These architectures can also accommodate non-square GKP states with noise that may be anisotropic. Different lattices can be accommodated by making adjustments to the homodyne measurements (which in some architectures can be facilitated by making adjustments to the phases of classical local oscillators in a quantum processing unit (QPU), described herein). Note that at least some (e.g., all) GKP states can be defined on the same (e.g., a common) lattice, and the cluster state can be (or must be) bipartite.

The following describes photonic quantum computing, a dumbbell-splitter construction, and definitions of GKP states on arbitrary lattices.

## Position and momentum operators

Let *â* and *â*† be the bosonic annihilation and creation operators, respectively. The position operator can then be defined as

$$\hat{q} = \frac{1}{\sqrt{2}}(\hat{a} + \hat{a}^{\dagger})$$

and the momentum operator can be defined as

$$\hat{p} = \frac{-i}{\sqrt{2}}(\hat{a} - \hat{a}^{\dagger}).$$

Note that $\hbar = 1$. Therefore, $[\hat{q}, \hat{p}] = i$.

The displacement operator is defined as:

$$\widehat{D}(\alpha) = e^{(\alpha\hat{a}^{\dagger} - \alpha^{*}\hat{a})},$$

where $\alpha = re^{i\phi}$ with $r \geq 0$ and $\phi \in [0, 2\pi)$.

The pure position and momentum displacement operators, also called the Weyl-Heisenberg displacement operators, can be defined as

$$\hat{X}(s) = \widehat{D}\left(\frac{s}{\sqrt{2}}\right) = e^{-is\hat{p}}$$

and

$$\hat{Z}(s) = \hat{D}\left(\frac{is}{\sqrt{2}}\right) = e^{is\hat{q}},$$

which can displace a state by +s in position and +s in momentum, respectively.

The squeezing operator can be defined as

$$\hat{S}(z) = e^{\frac{1}{2}\left(z^*\hat{a}^2 - z\hat{a}^{\dagger 2}\right)},$$

where $z = re^{i\phi}$ with $r \geq 0$ and $\phi \in [0, 2\pi)$.

An eigenstate of position can be indicated by $|\cdot\rangle_q$ and an eigenstate of momentum can be indicated by $|\cdot\rangle_p$, where $\cdot$ can represents the position or momentum of the state, respectively. The wave functions of position and momentum eigenstates can be Dirac delta functions in position and momentum space, respectively.

Consider a state $|\psi\rangle$. The state's position-space wave function can be given by $\psi(s) = {}_q\langle s|\psi\rangle$ while the state's momentum-space wave function can be given by $\tilde{\psi}(s) := {}_p\langle s|\psi\rangle$.

In practice, approximate eigenstates of position and momentum (where the delta functions can be "smeared" and not infinitely narrow) may be referred to herein as "squeezed states" or "single-peak" states. States with two peaks can be referred to as "cat states."

## GKP encoding

In the GKP encoding, the logical basis states can be given as $\{|0_{\mathrm{GKP}}\rangle, |1_{\mathrm{GKP}}\rangle\}$, where:

$$|0_{\mathrm{GKP}}\rangle = \sum_{n\in\mathbb{Z}} |2n\sqrt{\pi}\rangle_q = \sum_{n\in\mathbb{Z}} |n\sqrt{\pi}\rangle_p$$

and

$$|1_{\mathrm{GKP}}\rangle = \sum_{n\in\mathbb{Z}} |(2n+1)\sqrt{\pi}\rangle_q = \sum_{n\in\mathbb{Z}} (-1)^n |n\sqrt{\pi}\rangle_p.$$

In position space, the wave functions of $|0_{\mathrm{GKP}}\rangle$ and $|1_{\mathrm{GKP}}\rangle$ can be Dirac combs with a state-dependent offset:

$$\psi_{0,\mathrm{GKP}}(s) = \sum_{n\in\mathbb{Z}} \delta\left(s - 2n\sqrt{\pi}\right),$$

$$\psi_{1,\mathrm{GKP}}(s) = \sum_{n\in\mathbb{Z}} \delta\left(s - (2n+1)\sqrt{\pi}\right).$$

In momentum space, the wave functions of $|0_{\mathrm{GKP}}\rangle$ and $|1_{\mathrm{GKP}}\rangle$ can be Dirac combs with a state-dependent phase between spikes:

$$\tilde{\psi}_{0,\mathrm{GKP}}(s) = \frac{1}{\sqrt{2}}\sum_{n\in\mathbb{Z}} \delta\left(s - n\sqrt{\pi}\right),$$

$$\tilde{\psi}_{1,\mathrm{GKP}}(s) = \frac{1}{\sqrt{2}}\sum_{n\in\mathbb{Z}} (-1)^n \delta\left(s - n\sqrt{\pi}\right).$$

Logical operators $\hat{X}_L$ and $\hat{Z}_L$ can be implemented via $\sqrt{\pi}$ displacements, e.g., $\hat{X}(\sqrt{\pi})$ and $\hat{Z}(\sqrt{\pi})$, respectively.

A GKP sensor state $|\emptyset\rangle$ (often referred to simply as a sensor state or a qunaught state) can be defined by a specific peak spacing, given by

$$|\emptyset\rangle = \sum_{n\in\mathbb{Z}} \left|n\sqrt{2\pi}\right\rangle_q.$$

## Pauli operators

The three GKP-encoded logical Pauli operators can be defined as

$$\hat{\sigma}_x = e^{-i\sqrt{\pi}\hat{p}}$$

$$\hat{\sigma}_z = e^{i\sqrt{\pi}\hat{q}}$$

$$\hat{\sigma}_y = i\hat{\sigma}_x\hat{\sigma}_z.$$

Note that $\hat{\sigma}_x$ can be equivalent to a $\sqrt{\pi}$ displacement in position, while $\hat{\sigma}_z$ is equivalent to a $\sqrt{\pi}$ displacement in momentum. Referring to the above definitions for $|0_{\text{GKP}}\rangle$ and $|1_{\text{GKP}}\rangle$, $\hat{\sigma}_x$ can be a bit flip, $\hat{\sigma}_x$ can be a phase flip, and $\hat{\sigma}_y$ can be both a bit and phase flip.

## Hadamard operator and eigenstates

The Hadamard operator can be given by

$$\hat{H} = e^{i\frac{\pi}{2}\hat{n}},$$

where $\hat{n} = \hat{a}^\dagger\hat{a} = \frac{1}{2}(\hat{q}^2 + \hat{p}^2 - 1)$ is the number operator. Note that $\hat{H}$ can be equivalent to a $\pi/2$ rotation in phase space. In terms of the logical basis states, $\hat{H}$ can map a logical basis state to a superposition of the two logical basis states:

$$\hat{H}|0_{\text{GKP}}\rangle = \frac{1}{\sqrt{2}}|0_{\text{GKP}}\rangle + \frac{1}{\sqrt{2}}|1_{\text{GKP}}\rangle = |+\rangle$$

$$\hat{H}|1_{\text{GKP}}\rangle = \frac{1}{\sqrt{2}}|0_{\text{GKP}}\rangle - \frac{1}{\sqrt{2}}|1_{\text{GKP}}\rangle = |-\rangle.$$

Eigenstates of $\hat{H}$ are indicated as $|H+\rangle$ (eigenvalue of +1) and $|H-\rangle$ (eigenvalue of -1). Notably, these Hadamard eigenstates can be non-Pauli eigenstates and, therefore, can be magic states.

## Gaussian boson sampling

Gaussian boson sampling (GBS) refers to preparing a multi-mode state and measuring a subset (or all) of the modes in the Fock basis. In the context of preparing states for photonic quantum computing, GBS typically involves preparing a multi-mode state by interfering $N$ squeezed states via a network of beamsplitters and measuring $N$ - 1 modes in the Fock basis with photon-number-resolving detectors (PNRs). The output of a GBS device can be a non-Gaussian state that can be used as a resource for GKP-based quantum computation, where the number of photons detected at each PNR is indicative of the properties of the non-Gaussian state. While GBS devices can directly produce a number of useful resource states (squeezed cat states, 3-peak states, GKP states, etc.), GBS is non-deterministic. The probability of having a usable GBS output can be boosted by utilizing multiple GBS devices in parallel and multiplexing the outputs to select for the one(s) with the most favourable properties. The probability of directly producing high-quality GKP states, for example, can be quite low. For this reason, approaches other than direct GKP state generation, such as cat state breeding and amplification, can be used.

Note that while non-Gaussian states are produced non-deterministically by GBS devices, single-peak/squeezed states can be produced deterministically using squeezed light sources (e.g., in the case of photonics, using microring resonators).

**GKP breeding**

Because the probability of directly producing a GKP state using a GBS device can be low, GKP "breeding" techniques have been developed. These breeding techniques can include taking as input other states that are easier to produce (e.g., squeezed states, cat states, 3-peak states, etc.), and/or utilizing a breeding circuit that entangles various input states (e.g., using beamsplitters). These techniques can also include performing homodyne measurements on the states to produce GKP states. As an example, a photonic quantum computing architecture can include (1) a GBS device(s) (and, optionally, squeezed light sources) producing some combination of photonic states (squeezed states, cat states, 3-peak states, etc., (2) a multiplexing circuit that can select for desired states out of the states produced by the GBS devices (and/or squeezed light sources), and (3) a breeding circuit that can use the states selected by a multiplexing circuit to generate GKP states.

**Dumbbell-splitter constructions**

Passive (and/or static) architectures are described below. More specifically, three different beamsplitter networks are described. *Graph/graph state, cluster/cluster state,* and/or *lattice* can, in some instances, be used interchangeably. *Edges, connections,* and *links* can be used interchangeably to describe maximal entanglement between two qubits or optical modes, as represented by the edges of a graph. The *neighbours* of a node *a* in a graph can include all nodes connected to *a* via an edge. The *connectivity, degree,* or *valence* of a node in a graph can refer to the number of incident edges to the node and/or the number of neighbours of that node. The beamsplitter (linear-optical entangling) network associated with a general passive architecture can be referred to as a *generalized beamsplitter network (GBN).* A splitter (e.g., a four-splitter) can be a special case of such a network. The nodes comprising a macronode can be referred to as *micronodes.* In every macronode, there can be one *central node/mode* (referred to as a *star node/mode*), with the remaining ones being *satellite nodes/modes* (also referred to as *planet nodes/modes*). The *size* of a macronode can refer to the number of micronodes it contains (e.g., the connectivity of the reduced node). *Dumbbell* and *Bell state* can be used interchangeably, although in some instances, there can be subtle technical differences between the foregoing. *Qunaught* and *sensor* state can be used interchangeably.

**Passive and/or Static Architecture**

In some known architectures, the state factory outputs GKP Pauli eigenstates and/or momentum-squeezed states. Continuous variable (CV) controlled-Z ($\hat{C}_Z$) gates entangle these states according to the geometry of the desired qubit cluster state. Each individual $\hat{C}_Z$ gate can require inline squeezing, and the architecture furthermore can necessitate fast switching to create a different graph state in every time step. Both of these requirements can impose additional hardware challenges and/or can add additional noise.

A passive architecture, in contrast, can offer a way to perform optical measurement-based fault-tolerant quantum computing without the need for in-line squeezing or reconfigurable linear-optical networks at the level of the entangling component (e.g., the stitcher, described further herein). In the passive architecture, the resources (optical GKP states) can interact via a fixed beamsplitter network to produce a Raussendorf-Harrington-Goyal (RHG) lattice - a cluster state used for a measurement-based implementation of the surface code. Lattices where nodes have four incident edges (like the bulk of the RHG lattice) can be obtained via beamsplitter networks known as *four-splitters.* These four-splitters fall under a more general class of networks known as $2^N$-*splitters*, which are described further herein.

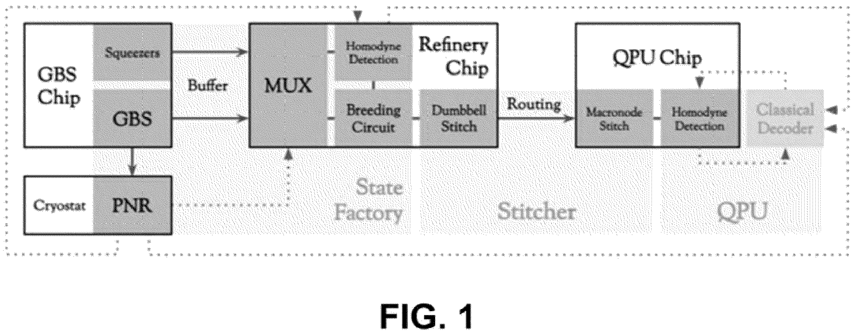

FIG. 1 is a schematic diagram of a photonic quantum computing architecture (which can include, for example, a state preparation circuit and/or an optical circuit), according to an embodiment. The architecture can include a plurality of physical integrated circuits (also referred to as chips) (e.g., GBS chip, refinery chip, and QPU chip), which do not necessarily have a one-to-one correspondence with a plurality of modules of the architecture (e.g., state factory, stitcher, and QPU).

The state factory shown in FIG. 1 can be an example embodiment of a state preparation circuit. As described herein, the GBS chip (e.g., that includes and/or is functionally and/or structurally similar to a GBS device) can output a non-Gaussian state. In some implementations, the GBS chip can include a plurality of GBS devices arranged in parallel, such that a multiplexer (MUX) can select a respective output(s) of these parallel GBS devices (e.g., an output(s) that have more favourable properties as compared to a remaining output(s)). Optionally, the GBS chip can also include one or more squeezed light sources (labeled as "Squeezers" in FIG. 1), the output(s) of which may also be received by the MUX. In such embodiments, deterministically generated squeezed light may selected by the MUX and used in lieu of the GBS output states if too few (e.g., none) of the GBS output states have the desired properties. In some implementations, the refinery chip can optionally include a breeding circuit that can be configured to generate GKP states based on states produced by the GBS chip. As described herein, the refinery chip shown in FIG. 1 can be configured to apply a transformation to GKP states that are received from the GBS chip and/or produced by the breeding circuit. By performing the transformation, the refinery chip can produce aligned GKP states that can be representable by a common non-square lattice (e.g., a rectangular lattice or a hexagonal lattice), as described further herein. The dumbbell stitch element (e.g., that is structurally and/or functionally similar to a dumbbell stitcher, as described herein) can be configured to entangle (e.g., by performing a first entangling function) two of these aligned GKP states to produce a two-mode GKP cluster state (e.g., a dumbbell, described further herein). The QPU chip can include a macronode stitch element (e.g., that is structurally and/or functionally similar to a macronode stitcher, described further herein), which can be configured to entangle (e.g., by performing a second entangling function) a plurality of first modes and/or second modes from a plurality of two-mode GKP cluster states that are produced by the dumbbell stitch element. As a result, the macronode stitch element can be configured to produce a macronodal cluster state (also referred to herein as a macronode graph, the vertices of which are referred to as macronodes).

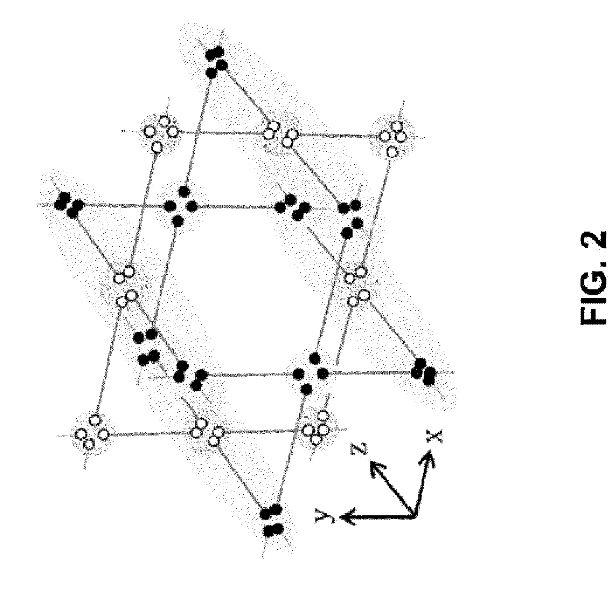

The QPU chip can also include a homodyne detection element (e.g., at least one homodyne detector). The homodyne detection element can be configured to perform, for example, a GKP $X$ measurement, which can include homodyne measurements of at least one mode (e.g., all modes) of a macronode that is produced by the macronode stitch element. More specifically, as described further herein, satellite modes of the macronode can be measured in $q$, and a central mode of the macronode can be measured in $p$. A linear combination of the homodyne measurement outcomes can be used to determine a bit value for that macronode (e.g., as described further herein in relation to modified measurement outcomes). An example of a macronodal cluster state is shown in FIG. 2 (described further herein), and a GKP $X$ measurement of such an example macronodal cluster state can include measuring three modes of a macronode of the macronodal cluster state in $q$ and an additional mode of the same macronode in $p$.

At least some of the elements shown in FIG. 1 can be optionally included or optionally excluded in at least some alternative embodiments of a state preparation circuit not shown in FIG. 1. For example, in some embodiments, the breeding circuit can be excluded and/or not used in a state preparation circuit (e.g., if the GBS chip produces a GKP state). In yet further embodiments, the multiplexer and/or the homodyne detection element can be excluded from the refinery chip.

A high-level function of passive architectures includes taking the physical resource of maximally entangled states (referred to herein, in the case of two maximally entangled states, as "dumbbells") and generating a desired qubit graph state - known as the *canonical* or *reduced* graph - using only passive linear optics and homodyne measurements. At an intermediate step, the dumbbells can be combined in such a way that they produce a *macronode* version of the qubit graph state (also referred to herein as a macronodal cluster state). In this macronode graph, each node from the reduced graph can be replaced by $N$ modes, where $N$ can be the number of connections at the reduced node.

FIG. 2 is a representation of the primal unit cell of a three-dimensional (3D) macronodal cluster state, which can be computationally equivalent to an RHG lattice. The 3D lattice can exist in two spatial ($x, y$) dimensions and one temporal dimension ($z$).

## Modified Measurement Outcomes

When generating a qubit lattice using continuous-variable resources states, the final lattice can be treated as if it were a native qubit lattice. The physical measurement outcomes obtained from measuring the macronode graph (e.g., homodyne measurement outcomes in the QPU), however, can be rescaled and combined to obtain reduced (e.g., canonical) homodyne outcomes and can be converted into bit values through a binning strategy. This binning strategy is used to convert CV measurement outcomes from homodyne measurements into logical bit values. Altered measurement outcomes are detailed herein for different beamsplitter networks.

## Generalized passive architecture

In some known architectures, the linear-optical entangling network is designed specifically for the RHG lattice, where each node (in bulk) has four edges. This design means that the macronodes have four modes such that four copies of the physical resource are needed per node, and there are four modes at the input to the splitter. In these known architectures, this network can only accommodate four inputs.

There are scenarios where it can be desirable to go beyond the original beamsplitter network. For example, at the boundaries of the RHG lattice nodes can have reduced connectivity (e.g., only two or three incident edges). As a result, the corresponding macronodes can contain only two or three micronodes. To deal with this scenario (e.g., while still using a single stitcher that requires four inputs), additional modes can be added and then deleted via destructive measurements. This process, however, can add more noise to the lattice and/or can require additional resources, implying a need for a solution that does not require additional nodes while maintaining the noise propagation properties of the foursplitter.

Furthermore, if quantum error correction codes are explored beyond the surface code, the connectivity of the corresponding lattice can vary considerably.

The generalized passive architecture described herein aims to overcome the foregoing limitations of some known architectures by providing a fixed beamsplitter network that entangles macronodes of any number of modes. The generalized passive architecture provides a way to (1) passively generate lattices other than the RHG lattice (including graph states corresponding to quantum error correction codes) and (2) passively entangle macronodes at the boundaries of a lattice where, regardless of lattice, the number of modes will vary.

The beamsplitter network associated with a generalization of the passive architecture can be referred as a *generalized beamsplitter network* (*GBN*).

### Converting a CV resource to a qubit graph state

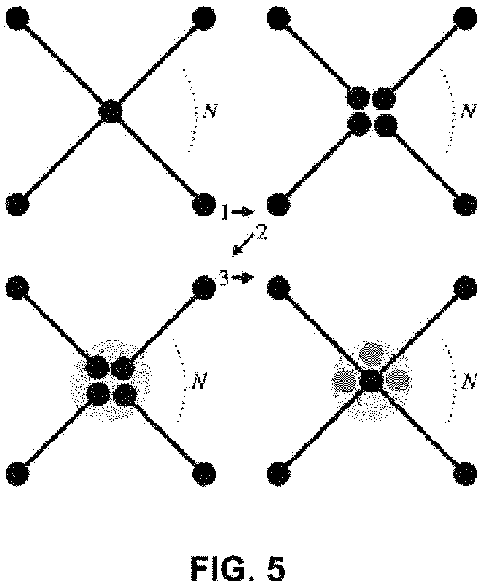

In practice, some GBN and prescription of homodyne measurements can be used to generate the graph state corresponding to an arbitrary qubit error-correcting code. FIG. 5 shows a representation of a general procedure for constructing qubit error-correcting code graphs from passive linear optics using a dumbbell as a resource state. First, each edge in the qubit graph is associated with a dumbbell state (the standard interpretation for a qubit graph state can be that each node is $|+\rangle$ and each edge is a $\hat{C}_Z$). This forms a macronode corresponding to each vertex of the qubit graph state. Then, the chosen GBN is applied to nodes within each macronode. Finally, homodyne measurements delete all but one mode in each macronode (the satellite modes), creating entanglement between the remaining modes (the star modes), which corresponds to the structure of the reduced (qubit) graph state.

### Physical Mode Level

One way to passively generate a highly connected lattice can be to begin with many smaller entangled states that are further entangled by a passive linear-optical network. Certain choices of measurement bases can then project the larger state down to the target state. The lattice construction techniques discussed herein can share a common entanglement resource, which is introduced below. The notation used below can be interpreted in the physical (CV) level rather than the qubit level like above.

### The Resource

The passive architecture can be based on probabilistic sources of GKP states. When a GKP state fails to arrive, a *p*-squeezed state can be swapped in its place. For passive architectures, the basic resource can become a "dumbbell": a two-mode maximally entangled state consisting of some combination of GKP and squeezed states. To avoid inline squeezing, dumbbells can be produced by interacting one of the following combinations at a 50:50 beamsplitter:

**(a)** two squeezed states;

**(b)** two GKP (non-magic) sensor states;

**(c)** a squeezed state and a GKP sensor state (magic or not); and/or

**(d)** a GKP magic (sensor) state and a squeezed state.

For simplicity, it can be assumed that every input mode is in a GKP (e.g., non-magic) state. Other analyses and simulations consider the effects (particularly on thresholds) of what can be referred to as "swap outs," where one or more GKP states are replaced with a squeezed state.

The sensor state can be defined via:

$$|\emptyset\rangle := \int ds\, \text{III}_{\sqrt{2\pi}}(s)|s\rangle_q = \int dt\, \text{III}_{\sqrt{2\pi}}(t)|t\rangle_p$$

where the Shah function is a Dirac comb defined as $\mathrm{III}_T(t) := \sum_{k=-\infty}^{\infty} \delta(t = kT)$.

Two sensor states can interact at a 50:50 beamsplitter via:

$$\hat{B}_{1,2}|\emptyset\rangle_1 \otimes |\emptyset\rangle_2 = \hat{\Pi}_{\mathrm{GKP}}|\mathrm{EPR}\rangle.$$

The EPR state can be defined in circuit notation as:

$$|\mathrm{EPR}\rangle := \hat{C}_X^{12}[1]|0\rangle_{p_1}|0\rangle_{q_2} = \hat{F}_2^\dagger \hat{C}_Z^{12}[1]|0\rangle_{p_1}|0\rangle_{p_2}.$$

Typically, a *dumbbell* can be equivalent to this EPR state up to a Fourier transform (also referred to herein as a Fourier transformation). Thus, the *dumbbell* can be: $\hat{C}_Z^{12}[1]|0\rangle_{p_1}|0\rangle_{p_2}$.

## Generalized Beamsplitter Networks (GBNs)

GKP Bell pairs can be tied together using various beamsplitter networks. In general, the stitchers discussed herein can act on a macronode site where a number of GKP Bell pairs meet. As shown in FIG. 5 (lower left), four GKP Bell pairs meet and form a macronode.

The larger circle (enclosing four smaller circles) depicted in these graphs can highlight the macronode. The GBN can act on a plurality of (e.g., all) micronodes within a macronode. Then, all but one of the nodes (the *satellite modes*) can be measured out, leaving a single node (the *star mode*). The reduced lattice can comprise entirely unmeasured star modes. The size of the macronode can therefore correspond to the number of input modes to the GBN (*N* in FIG. 5).

An overview of the properties of at least some possible families of GBNs in a general passive architecture is set forth below.

### $2^N$-splitter

The $2^N$-splitter is a generalization of the four-splitter used in the original passive architecture. This GBN is intended to be a balanced entangling operation between pairs of modes. The basic idea is to connect each pair with a single beamsplitter, then to connect each member of the pair to another set using two more beamsplitters, then to connect each of those four to another set of four using four beamsplitters, and so on. This process can be possible with macronodes of sizes $2^N$.

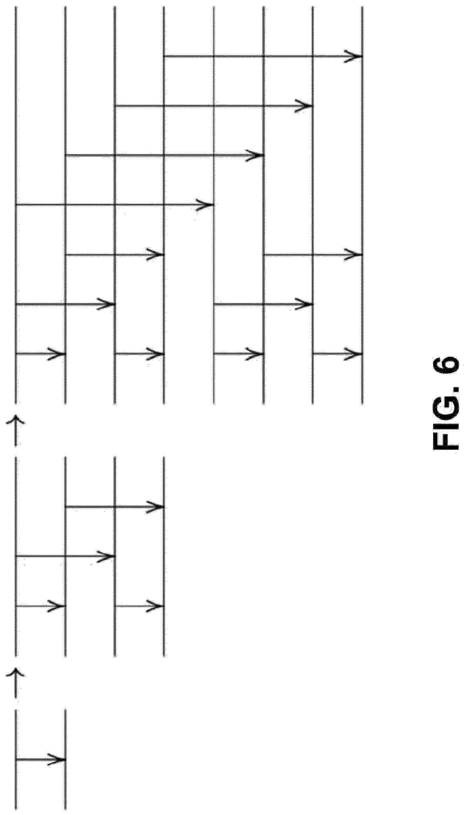

FIG. 6 is a schematic diagram of a $2^N$-splitter, which can be a GBN that generalizes the four-splitter. This circuit is arranged with input on the left and output on the right. This example constructions starts with two modes connected by a beamsplitter and doubles the number of modes each time. The GBN can use $2^N$ input modes for some integer *N*. Measuring all but one mode in any measurement basis can reduce the macronode to a single mode.

The $2^N$-splitter has an advantage that any mode can be the unmeasured, central mode.

Disadvantages of the $2^N$-splitter can include:

(a) Restriction on inputs. The restriction to macronodes of size $2^N$ can, in some instances, be a disadvantage when trying to extend beyond graphs with this connectivity. Consider a macronode of size *M*. To accommodate this, a GBN of size $2^N$ with $N = \lceil \log_2 M \rceil$ would need to be chosen. Then, the remaining $M - 2^N$ inputs would be seeded with ancillary modes, requiring additional resources and injecting more noise.

### Linear splitter

The linear GBN can accommodate a large (e.g., any) number of input modes. Its analytic form is:

$$\hat{U}_G^{(N)} := \hat{B}_{N-1,N}(\theta_N) \dots \hat{B}_{n-1,n}(\theta_n) \dots \hat{B}_{1,2}(\theta_2),$$

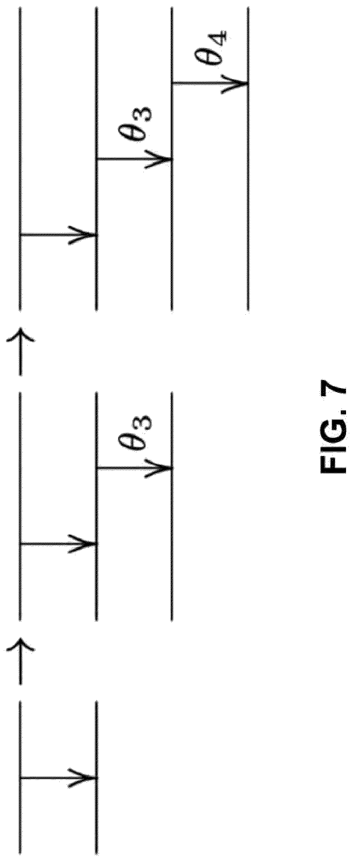

where $\theta_n := \mathrm{arcsec}(\sqrt{n})$. The $N = 2$ to $N = 4$ circuit is shown in FIG. 7.

FIG. 7 is a schematic diagram of a linear GBN. This circuit is arranged with input on the left and output on the right. This network is constructed linearly, in time order. When another mode is added, it interacts with the previous mode via a

beamsplitter of reflectivity $\theta_n := \operatorname{arcsec}\left(\sqrt{n}\right)$, where $n$ is the current total number of modes in the linear-optical network. The reflectivity of each beamsplitter is not dependent on the total number of modes, $N$; it is only dependent on the index of the current mode, $n$. For example, the left-most beamsplitter, which is the first in time ordering, will always have reflectivity $\theta_2 = \pi/4$.

For the linear GBN, the unmeasured mode is the $N^{\text{th}}$ mode, whose measurement basis can be freely chosen. Each other mode can be measured in the position basis.

Advantages of the linear splitter can include:

**(a)** Regardless of the size of the macronode, each mode only goes through two beamsplitters, except the upper- and lower-most which go through only one beamsplitter.

Disadvantages of the linear splitter can include:

**(a)** *Possible measurement.* The lack of measurement freedom in the linear splitter compared to the $2^N$-splitter can be a disadvantage in some instances. Because the linear splitter lacks measurement degrees of freedom, no choice of measurement bases can apply a single-mode unitary gate to the central mode. Further, because the unmeasured mode is fixed (the bottom mode), the beamsplitter network can be inflexible. The impact of this restriction can, in some instances, necessitate selection of the physical mode in the macronode that persists to the resulting lattice.

**(b)** *Optical circuit depth.* The depth of the optical circuit of this GBN can grow linearly with the number of modes in the macronode. This growth can cause modes to exhibit increasing nonuniform loss, as early modes propagate through waveguides waiting for later modes to interact with their beamsplitters.

**Tree splitter**

The tree splitter can be a generalization of the $2^N$-splitter to any number of modes. It can maintain the minimal circuit depth of the $2^N$-splitter while accommodating any number of input modes, like the linear splitter, by restricting the measurements to $q$ quadrature measurements on all but the unmeasured mode. This GBN has the following analytic form:

$$\hat{U}_T^{(N)} := \left[\hat{B}_{1,j^2+1} \dots \hat{B}_{n-j^2,n} \dots \hat{B}_{N-j^2,N}\right] \dots^j \left[\hat{B}_{1,2} \dots \hat{B}_{n'-1,n'} \dots \hat{B}_{N'-1,N'}\right],$$

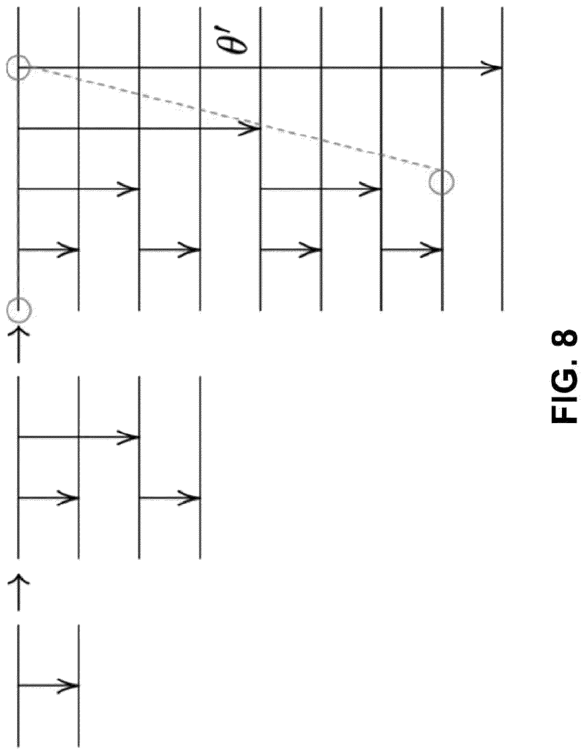

where $\{n', N'\} \in 2\mathbb{Z} \le N$ and $\{n, N\} \in \mathbb{Z}$. Each bracketed segment of the above equation can represent one of $j$ time steps, and the beamsplitters can, in general, be unbalanced. Each beamsplitter can have reflectivity $\theta = \arctan\left(\frac{\sqrt{b}}{\sqrt{t}}\right)$, where t is the number of modes in the *causal cone* of the beamsplitter's top mode and $b$ is the number of modes in the causal cone of the beamsplitter's bottom mode. To determine the causal cone, a mode can be tracked backwards in time and the number of modes that are connected via beamsplitters can be counted until the circuit input is reached. A tree splitter circuit is shown in FIG. 8. This circuit is arranged with input on the left and output on the right.

More specifically, FIG. 8 is a schematic diagram of a tree splitter for $N = 2, 4$, and 9, where $\theta' = \arctan\left(\sqrt{8}\right)$. The causal cone for the top mode is highlighted. There are 8 modes in the causal cone of the top mode, and a single mode in the causal come of the bottom mode.

Advantages of the tree splitter can include log depth. Disadvantages of the tree splitter can include having to restrict measuring $q$ in all modes but one mode.

**Definitions of GKP States on Arbitrary Lattices**

Set forth below are definitions of single-mode unitaries that can convert between the phase space lattices on which GKP states are defined.

GKP states can be conveniently defined by their stabilizers, which can correspond to and/or be associated with commuting displacements in phase space. The standard "square" GKP encoding is just one choice of such stabilizers: an ideal logical 0 can be stabilized by a $2\sqrt{\pi}$ displacement along $q$ and a $\sqrt{\pi}$ displacement along $p$. In this case, a logical (bit flip) error would occur for a displacement larger than $\sqrt{\pi}/2$ in $q$. Just as well, GKP states can be defined on non-square lattices. Such states can be stabilized by displacement of different magnitudes along different directions in phase space.

**The generic Lattice Transformation Unitary**

Non-square GKP lattices can be obtained by a Gaussian unitary, $\hat{U}$. By convention, $\hat{U}$ can be associated with the transformation (e.g., the optical unitary transformation) *from* square-grid GKP states *to* the desired lattice, that is:

$$\hat{U}|\psi\rangle_{\text{square GKP}} = |\psi\rangle_{\text{other GKP}}.$$

This unitary can be decomposed into rotation and squeezing operators:

$$\hat{U} = \hat{R}(\theta)\hat{S}(r)\hat{R}(\theta').$$

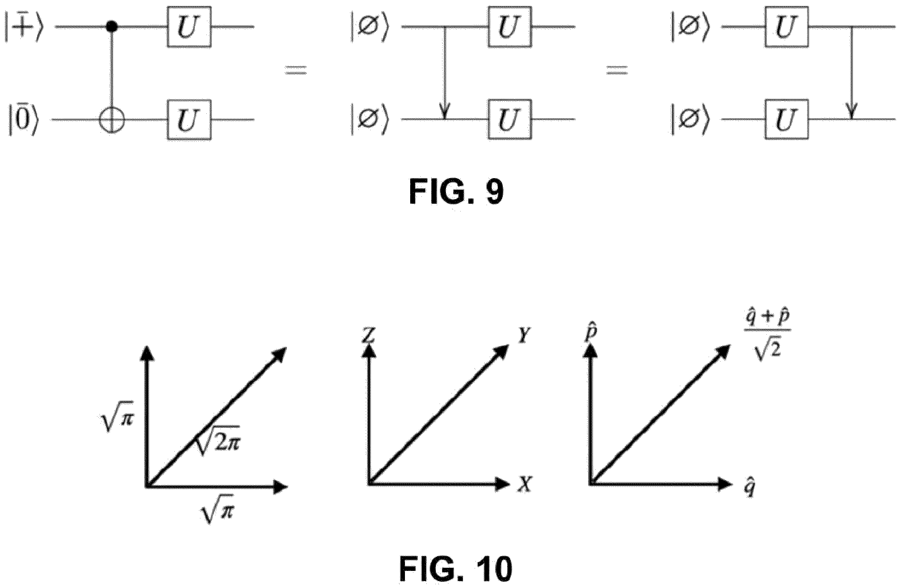

A Bell pair in a GKP lattice code can be written as shown in FIG. 9.

Therefore, to make Bell pairs (e.g., dumbbells), the state can be $\hat{U}|\varnothing\rangle$.

Measurements, binning, and logical gates

If $\hat{V}_{\text{sq}}$ is a logic gate for square-grid GKP, then

$$\hat{V}_{\text{other}} = \hat{U}^\dagger \hat{V}_{\text{sq}} \hat{U}$$

is a logic gate for hexagonal GKP. Otherwise, the Pauli operators are:

$$Z = \hat{U}^\dagger \hat{q} \hat{U}, \quad X = \hat{U}\hat{p}\hat{U}^\dagger, \quad Y = \hat{U}\left(\frac{\hat{p} + \hat{q}}{\sqrt{2}}\right)\hat{U}^\dagger.$$

In the hexagonal code, the logical axes are all balanced, so the binning in each is with respect to $n\sqrt{\frac{2\pi}{\sqrt{3}}}$.

**Rectangular GKP States**

For rectangular-lattice GKP codes, $\hat{U}$ is a measurement-based squeezer in $\hat{q}/\hat{p}$ and $\hat{U}|\varnothing\rangle$ is stabilized by minimal shifts $\hat{D}\left(\frac{a}{\sqrt{2}}\right)$ and $\hat{D}\left(\frac{ib}{\sqrt{2}}\right)$, such that $ab = 2\pi$. Measurement-based squeezing can be performed by interacting a state with an ancillary squeezed state at a beamsplitter and performing a homodyne measurement on one of the two beamsplitter outputs, for example. The corresponding symplectic matrix can be parameterized, with $\alpha \in \mathbb{R}_{\neq 0}$, by:

$$S_{\text{rect.}} = \begin{bmatrix} \alpha & 0 \\ 0 & 1/\alpha \end{bmatrix} = \text{diag}(\alpha, 1/\alpha).$$

$\alpha$ can refer to the *aspect ratio* of the rectangular GKP state. An aspect ratio of 1, less than 1, or greater than 1 can correspond to and/or be associated with states that are square, wider in $q$, or wider in $p$, respectively.

**Hexagonal GKP States**

Consider the unit phase space rhombus for square-grid GKP, as shown in FIG. 10, where the displacement that realizes a Pauli $Y$ is larger than displacements that realize Pauli $X$ and $Z$.

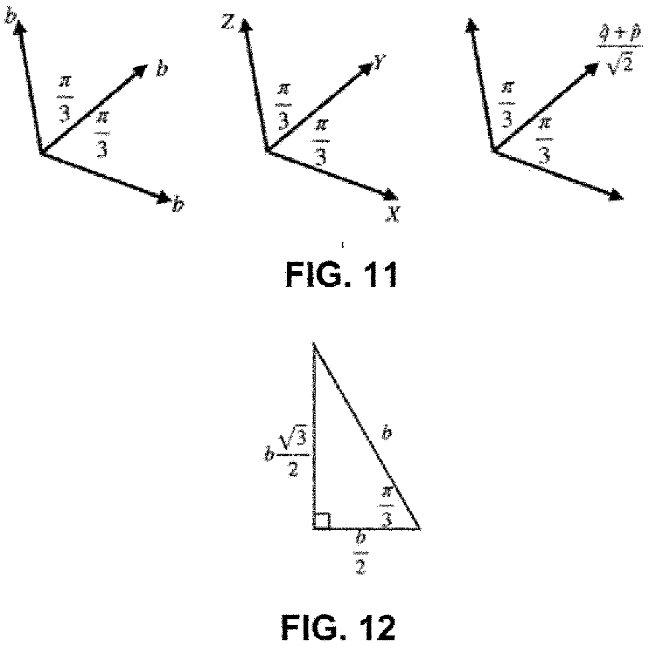

For hexagonal GKP, these displacements are all equal. One way to transform from square to hexagonal is to squeeze the phase-space coordinates $q$ and $p$ or, equivalently, to anti-squeeze $\frac{\hat{q}+\hat{p}}{\sqrt{2}}$ (which comes accompanied by squeezing $\frac{\hat{p}-\hat{q}}{\sqrt{2}}$ ) such that displacements along the $X$, $Y$, and $Z$ directions are all equal, as shown in FIG. 11.

$$\begin{bmatrix} \frac{1}{\sqrt{2}} & -\frac{1}{\sqrt{2}} \\ \frac{1}{\sqrt{2}} & \frac{1}{\sqrt{2}} \end{bmatrix} \begin{bmatrix} a^{-1} & 0 \\ 0 & a \end{bmatrix} \begin{bmatrix} \frac{\hat{q}+\hat{p}}{\sqrt{2}} \\ \frac{\hat{p}-\hat{q}}{\sqrt{2}} \end{bmatrix} = \begin{bmatrix} \frac{1}{\sqrt{2}} & -\frac{1}{\sqrt{2}} \\ \frac{1}{\sqrt{2}} & \frac{1}{\sqrt{2}} \end{bmatrix} \begin{bmatrix} a^{-1} & 0 \\ 0 & a \end{bmatrix} \begin{bmatrix} \frac{1}{\sqrt{2}} & \frac{1}{\sqrt{2}} \\ -\frac{1}{\sqrt{2}} & \frac{1}{\sqrt{2}} \end{bmatrix} \begin{bmatrix} \hat{q} \\ \hat{p} \end{bmatrix}$$

The appropriate shifts can be found by considering the area of the unit-cell rhombus = $\pi = \frac{\sqrt{3}b^2}{2} \to b = \sqrt{\frac{2\pi}{\sqrt{3}}}$ , from the triangle shown in FIG. 12.

To get a hexagonal GKP, $\frac{\hat{q}+\hat{p}}{\sqrt{2}}$ can be rescaled by $a = \frac{\sqrt{2\pi/\sqrt{3}}}{\sqrt{2\pi}} = \frac{1}{\sqrt[4]{3}}$ . A Gaussian unitary $\hat{U}$ whose Heisenberg-picture transformation (a) rotates $\frac{\hat{q}+\hat{p}}{\sqrt{2}}$ to $\hat{p}$, (b) squeezes it by $a = \sqrt[4]{3^{-1}}$ , and (c) rotates back can therefore be desirable:

$$\hat{U}^\dagger = \hat{R}^\dagger\left(\frac{\pi}{4}\right)\hat{S}^\dagger\left(\sqrt[4]{3^{-1}}\right)\hat{R}^\dagger\left(-\frac{\pi}{4}\right).$$

The following Schrodinger-picture unitary results:

$$\hat{U} = \hat{R}\left(-\frac{\pi}{4}\right)\hat{S}\left(\sqrt[4]{3^{-1}}\right)\hat{R}\left(\frac{\pi}{4}\right).$$

Noting that the symplectic matrices for successive Gaussian unitaries are ordered according to the Schrodinger-picture ordering of the unitaries, the associated symplectic matrix is $S_{\hat{U}} = S_{\hat{R}\left(-\frac{\pi}{4}\right)}S_{\hat{S}\left(\sqrt[4]{3^{-1}}\right)}S_{\hat{R}\left(\frac{\pi}{4}\right)}$ :

$$S_{\hat{U}} = \begin{bmatrix} \frac{1}{\sqrt{2}} & \frac{1}{\sqrt{2}} \\ -\frac{1}{\sqrt{2}} & \frac{1}{\sqrt{2}} \end{bmatrix} \begin{bmatrix} \sqrt[4]{3^{-1}} & 0 \\ 0 & \sqrt[4]{3} \end{bmatrix} \begin{bmatrix} \frac{1}{\sqrt{2}} & -\frac{1}{\sqrt{2}} \\ \frac{1}{\sqrt{2}} & \frac{1}{\sqrt{2}} \end{bmatrix} = \sqrt{\frac{1}{2} + \frac{1}{\sqrt{3}}} \begin{bmatrix} 1 & \tan\left(\frac{\pi}{12}\right) \\ \tan\left(\frac{\pi}{12}\right) & 1 \end{bmatrix}.$$

Further note that this symplectic matrix is not the typically associated with a square-to-hexagonal transformation because here the squeezing has moved the logical $X$ direction off the $q$ axis. To realign it, a phase shift can be appended on the end with $\theta = -\frac{\pi}{12}$ , which gives the symplectic typically associated with a square-to-hexagonal transformation: $S_{\hat{U}'}$

$= S_{\hat{R}(\theta)}S_{\hat{U}} = \sqrt{\frac{2}{\sqrt{3}}}\begin{pmatrix} 1 & \cos\left(\frac{2\pi}{3}\right) \\ 0 & \sin\left(\frac{2\pi}{3}\right) \end{pmatrix}$ . The squeezing-only symplectic is used in the further examples set forth below.

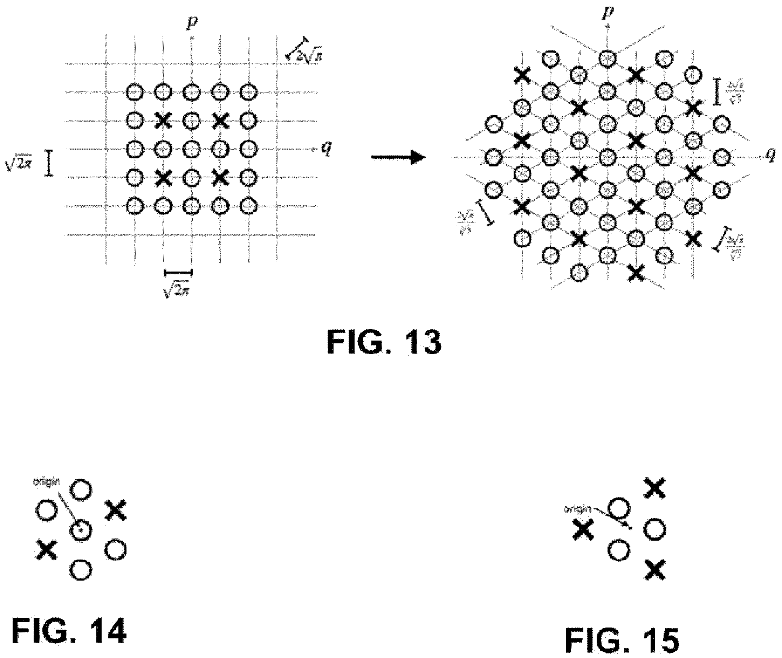

Applying $\hat{U}$ to the qunaught state $|\varnothing\rangle$ yields a representation shown in FIG. 13, where circles represent peaks and x-shaped crosses represent troughs. Note that at the origin location shown in FIG. 14, the state has $e^{i\pi\hat{n}}$ symmetry. Therefore, the state only has support on even Fock states. If the state were displaced such that its origin was as shown in FIG. 15, the state would have $e^{i\frac{\pi}{3}\hat{n}}$ symmetry and would therefore only have support over $j$, $j + 6$, $j + 12$, ... Fock states

where $j \in \{1,2,3,4,5\}$.

**State Generation**

Given a Gaussian boson sampler (GBS) that makes square-lattice qunaughts $|\varnothing\rangle$, the GBS can be converted to one that makes qunaughts for another GKP lattice, $\hat{U}|\varnothing\rangle$, using the Bloch-Messiah decomposition, which can decompose a (e.g., any) multimode Gaussian unitary into three parts: a linear optical network (beamsplitters + phase shifters), followed by squeezing, followed by another linear optical network.

For example, consider a 3-mode GBS described by linear optical network $\hat{U}_{\text{LO}}$ and with an additional $\hat{U}$ on the output mode to transform from square lattice to a different GKP lattice. The Bloch-Messiah decomposition gives new squeezings and new linear-optical networks:

$$UU_{\text{LO}}S(r_1) \otimes S(r_2) \otimes S(r_3) = U'_{\text{LO}}S(r'_1) \otimes S(r'_2) \otimes S(r'_3)U''_{\text{LO}}.$$

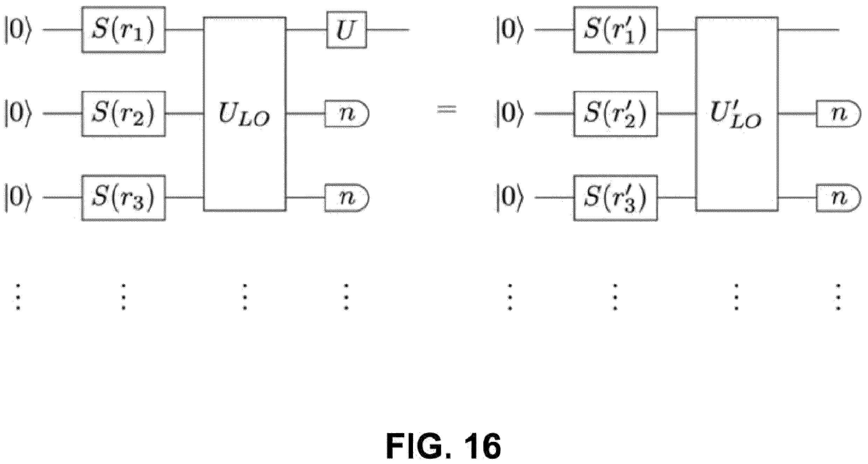

Using this, the GBS circuits shown in FIG. 16 are equivalent, where $U''_{\text{LO}}$ vanishes on the right-hand circuit because it's acting on vacuum states across all modes. Note that in performing the Bloch-Messiah decomposition for a GBS, desirable symmetries (e.g., equal squeezing) may be lost. This configuration may be seen as a starting point for the search for a circuit with the symmetries reinstated.

For a state factory involving GBS, multiplexing (MUX), amplification, and breeding, at least one of the following can be used:

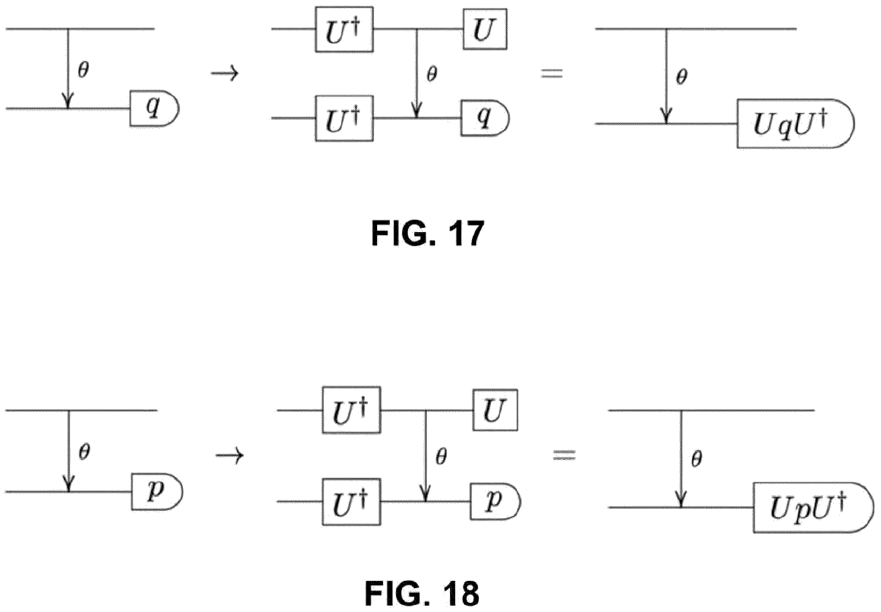

- GBS (as above)
- MUX (unchanged)
- Amplification, as shown in FIG. 17.
- Breeding, as shown in FIG. 18.

The circuits shown in FIGS. 17-18 illustrate that measuring in the bases $UqU^\dagger$ or $UpU^\dagger$ can be understood as (a) bringing the input states back to the square GKP lattice, (b) amplifying or breeding them there, and (c) returning the output state to the new GKP lattice.

For the dumbbell-splitter constructions:

**(a)** The architecture can be compatible with an arbitrary choice of single-mode GKP lattice and bipartite cluster state lattice (such as that emerging from a foliated CSS code), as described herein.

**(b)** Incorporating generic-lattice GKP states into the architecture can be equivalent or substantially similar to a change in the homodyne measurement pattern in the quantum processing unit (QPU). Conceptually, it can also be equivalent and/or substantially similar to emulating a square-GKP-based architecture but with noise modified by the lattice transformation (along with an extra Fourier transform on half of the modes).

**(c)** For a common combination of conditions (e.g., rectangular GKP states with diagonal anisotropic Gaussian random noise and a foliated CSS code effecting a fault-tolerant memory), the primal qubits can experience errors dependent on one quadrature, and the dual qubits can experience errors dependent on the other quadrature. In other words, generic GKP lattices can cause decoupling of $q/p$ errors into $X/Z$ (primal/dual errors), offering a way of incorporating biased noise, as described herein.

This separation can facilitate, at the qubit level, leveraging of the bias. For example, a rectangular rather than a square surface code can be made, and the side (primal or dual) that is more tolerant to errors can be associated with the worse of the two quadratures. This is because the rectangular surface code has unequal $X$ and $Z$ distances, corresponding to the logical $X$ and $Z$ operators associated with primal and dual qubits, respectively.

**Incorporating Noisy GKP States on Arbitrary Lattices into Passive Architectures**

Set forth below are systems and methods to emulate passive architectures with square GKP states via hardware that produces GKP states defined on a different lattice, followed by Gaussian random noise (GRN). Placement of Fourier transforms and modifications to the homodyne measurements in the QPU can emulate square-grid GKPs even in the presence of non-square non-ideal GKPs states. More specifically, at least some systems and methods described herein can emulate the square GKP encoding despite the presence of non-square GKP states on non-ideal lattices.

Reference herein can be made to "inner and outer lattices." These lattices can refer to the inner single-mode GKP lattice and its compatibility with the outer graph state lattice, which corresponds to and/or or is associated with, e.g., some error correcting code.

Recall that non-square GKP lattices can be obtained by a Gaussian unitary, $\hat{U}$. By convention, $\hat{U}$ can be associated with the transformation *from* square-grid GKP states *to* the desired lattice, that is:

$$\hat{U}|\psi\rangle_{\text{square GKP}} = |\psi\rangle_{\text{other GKP}}.$$

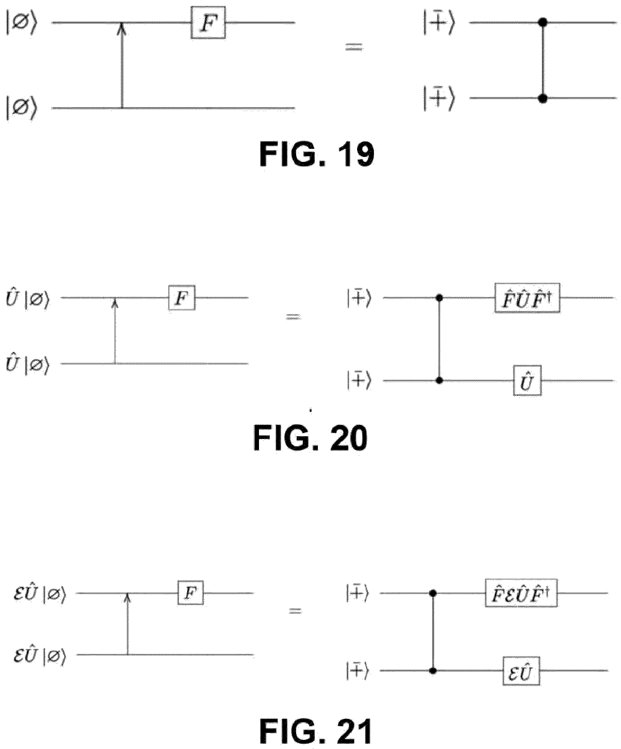

Out of the possible circuits for creating GKP Bell pairs in the square-lattice GKP encoding, one of interest is shown in FIG. 19, where $|\varnothing\rangle$ is a sensor state and $|\mp\rangle$ is a square-lattice GKP+ state.

The following description includes propagating the Gaussian random noise (GRN) channel $\varepsilon$ through the circuit. The *X*/*Y* matrix picture of the action of Gaussian completely positive (CP) maps are used; these transform the means $r$ and the covariances $\Sigma$ through

$$r \mapsto Xr + d$$

$$\Sigma \mapsto X\Sigma X^T + Y$$

where for the channels considered, the displacements $d = 0$.

$$\varepsilon \to \begin{cases} X = I \\ Y = \Sigma, \end{cases}$$

where $\Sigma$ is the covariance matrix associated with the GRN channel. Similarly, for some generic Gaussian unitary $\hat{V}$, the action is:

$$\hat{V} \to \begin{cases} X = S_V \\ Y = 0, \end{cases}$$

where $S_V$ is taken to be the symplectic matrix associated with $\hat{V}$.

### Dumbbell Creation from Noisy GKP States on Alternative Lattices

Because the creation of dumbbells can be common among several approaches to the passive construction of graph states, described below is how this part of the stitch is modified in the presence of noisy GKP states on generic lattices.

Suppose that the state factory produces non-square GKP states defined relative to the sensor states via $\hat{U}|\varnothing\rangle$. Because any two identical single-mode Gaussian unitary operations commute past a beamsplitter, the GKP lattice transformations can move through the dumbbell stitching circuit (e.g., the two-mode stitcher) as shown in FIG. 20.

Furthermore, uniform Gaussian random noise $\varepsilon$ can be added across this GKP dumbbell and move the operations through the beamsplitter in the same vein, as shown in FIG. 21.

By the composition rule of Gaussian CP maps, the action of the channels on the two modes after the $\hat{C}_Z$ gate is:

$$\varepsilon\hat{U}: \begin{cases} X = S_U \\ Y = \Sigma \end{cases} \qquad \hat{F}\varepsilon\hat{U}\hat{F}^\dagger: \begin{cases} X = S_F S_U S_F^{-1} \\ Y = S_F \Sigma S_F^T \end{cases}$$

As both of these channels are not additive ($X \neq I$), they are not modified Gaussian random noise channels. Therefore, examination further into the cluster preparation circuit can yield this interpretation.

### Non-Square GKPs in Dumbbell-Splitter Constructions

Set forth below are systems and methods to accommodate non-square GKPs into dumbbell-splitter constructions, such as the original passive architecture, as well as variations to the architecture (e.g., regarding the choice of inter-macronode stitcher).

Macronode Stitch of Noisy Dumbbells

Dumbbell halves can be sent to macronode sites to be entangled. As described above, an asymmetry exists in the dumbbell creation: half of the modes do not have and/or are not associated with a Fourier transform (referred to herein a type-*A* modes) and half of the modes (referred to herein as type *B* modes) do have and/or are associated with a Fourier transform. Suppose that the *type-A* modes meet only with other *type-A* modes at macronodes, and type-*B* modes meet only with other type-*B* modes. Note that, in at least some instances, dividing modes into type *A* and *B* modes is only possible if the graph corresponding to and/or associated with the graph state is two-colourable or bipartite, which can arise, for example, from a foliated CSS code.

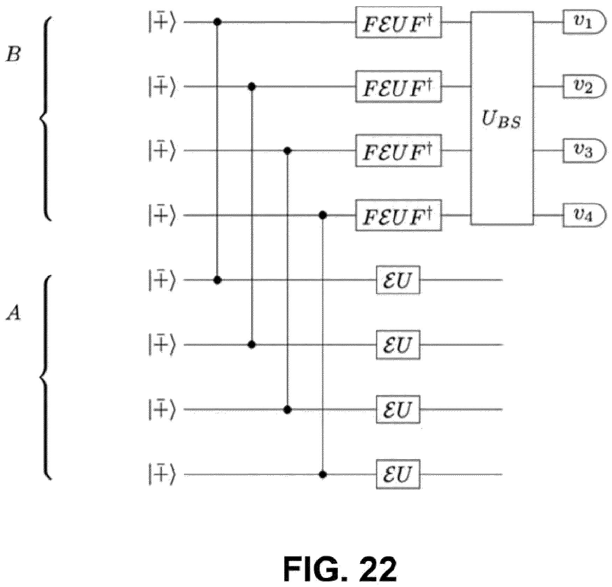

In the macronode stitch, dumbbell halves go through beamsplitter networks followed by a set of homodyne measurements. Although special (e.g., more complex) beamsplitter networks can be targeted in practice, a generic linear-optical network can be used for examples set forth herein. The resulting circuit is shown in FIG. 22.

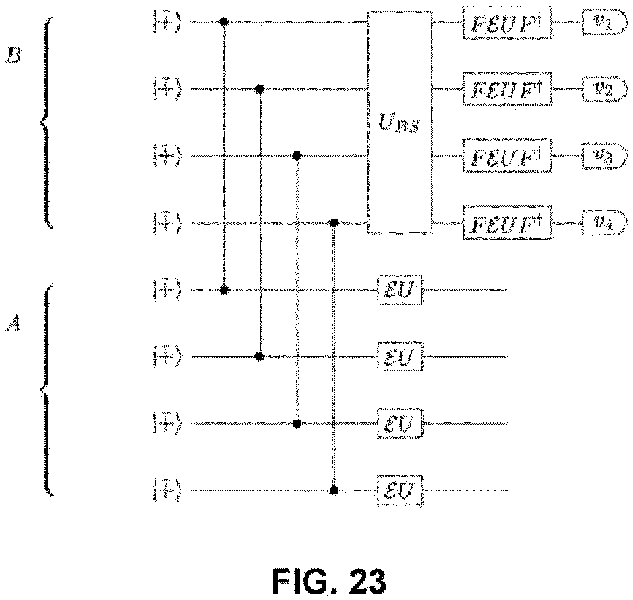

Here, $\hat{U}_{BS}$ is some beamsplitter network with arbitrary angles, and $v_i$ is some (yet unspecified) measurement basis. The operator $\hat{F}_\varepsilon \hat{U} \hat{F}^\dagger$, which acts identically on all four modes entering the beamsplitter network, commutes freely with this network, as shown in FIG. 23. FIG. 23 is a schematic diagram of a modified measurement pattern to accommodate non-square GKPs.

$v_i$ can be chosen so that the combination of the pre-measurement channel and the measurements correspond to Gaussian random noise followed by the correct set of square-GKP reduction measurements described herein. In some embodiments, these can be combinations of $q$, $p$, and $q \pm p$ measurements, but these measurement settings can be generalized further. Suppose that, for mode $i$, it is desired that a homodyne measurement $\hat{p}_{\theta_i} = \hat{R}(\theta_i)\hat{p}\hat{R}^\dagger(\theta_i)$ be performed along some angle $\theta_i$. Then, the correct measurement setting (as described further herein) is:

$$v_i = \widehat{U}'^{\,\dagger} \hat{p}_{\theta_i} \widehat{U}',$$

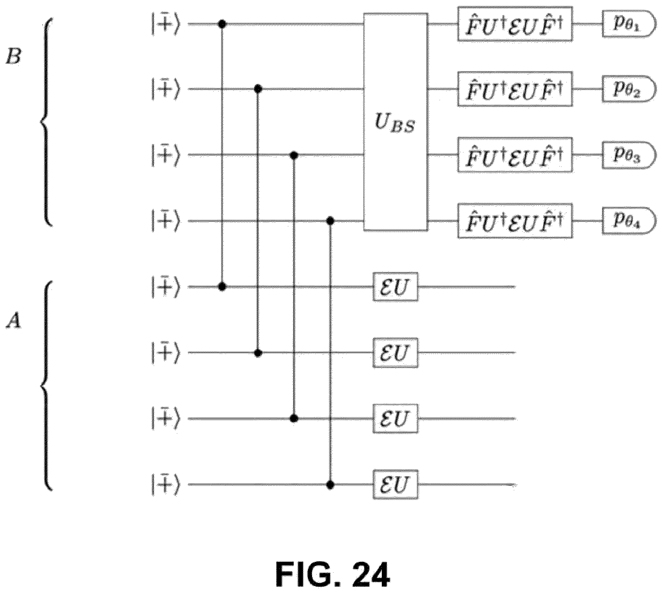

where $\hat{U}' = \hat{F}\hat{U}\hat{F}^\dagger$ is the Fourier-conjugated lattice transformation matrix. Selecting these measurements results in the circuit shown in FIG. 24. This circuit can be equivalent to the circuit shown in FIG. 23, illustrating the usual square-GKP measurement basis along with a new effective Gaussian random noise channel.

Further simplifying the channel $\varepsilon_B$ on the modes in partition $B$ and writing its action results in:

$$\mathcal{E} \to \mathcal{E}_B \equiv \hat{F}\widehat{U}^\dagger \mathcal{E} \widehat{U} \hat{F}^\dagger : \begin{cases} X = S_F S_U^{-1} I S_U S_F^{-1} = I \\ Y = S_F S_U^{-1} \Sigma (S_U^{-1})^T S_F^T. \end{cases}$$

Since $X$ is the identity, the new channel is indeed a Gaussian random noise channel - the original one conjugated by the unitary $\hat{F}\hat{U}^\dagger$.

The results above follow for macronodes $A$, but the updated noise channel $\varepsilon_A$ and the measurements $v_i$ on the modes in $A$ do not contain the extra Fourier transform:

$$v_i = \widehat{U}^\dagger \hat{p}_{\theta_i} \widehat{U} \qquad \mathcal{E}_A \equiv \widehat{U}^\dagger \mathcal{E} \widehat{U}.$$

Thus, it can be shown that, given a set of non-square GKP input states, a measurement pattern can be constructed that simulates the desired measurement on a cluster state constructed with square-lattice GKP states (at the expense and/or benefit of modified effective noise, as described further herein). Note that, when $\hat{U}$ is the identity and the noise is isotropic, the standard square-grid version of the architecture can be recovered.

## Experimental Procedure

To summarize the foregoing, the following modifications can be made to a square-GKP architecture to incorporate noisy non-square GKPs. Assuming creation of a bipartite cluster state, e.g., by implementing a CSS code, the modifications can include:

1. At every site, creating a GKP state defined on some lattice (e.g., rectangular).
2. Aligning all the GKP states to a globally common lattice, defined by unitary $\hat{U}$ (e.g., by applying a measurement-based squeezing operation). This step can be included because:

   a. the lattice transformation matrix and the GRN channel can be commuted through the dumbbell beamsplitter, meaning that each refinery must produce GKP states aligned to the same lattice, and

b. the subsequent operators are commuted through the macronode stitch, meaning that dumbbell halves from different macronodes must also have been aligned.

3. Labelling each half of a dumbbell *A* or *B,* and sending the *A* modes to QPU *A* and the *B* modes to QPU *B.* Note that not all QPUs of the same type will necessary look the same, since they may correspond to macronodes of different sizes. QPUs, however, can correspond to and/or be associated with the same modification to their measurement pattern.

4. In type A QPUs, modifying the usual square-lattice GKP measurement pattern via

$$p_{\theta_i} \rightarrow \widehat{U}^\dagger \hat{p}_{\theta_i} \widehat{U}$$

and in type B QPUs, modify the pattern via:

$$v_i \equiv \widehat{U}'^\dagger \hat{p}_{\theta_i} \widehat{U}',$$

where $\hat{U}' = \hat{F}\hat{U}\hat{F}^\dagger$.

## Leveraging Quadrature Bias from GKP States in Passive Constructions

In at least some constructions described herein, the noise covariances can be modified by the GKP lattice transformation for all modes and can carry an additional Fourier transform for some subset of the modes. This feature suggests at least one possible way to handle bias due to anisotropic noise in the architecture, as described further below.

## Modelling Rectangular GKP States

Consider, for the purpose of illustration, the family of rectangular GKP states, which can be produced natively by the current proposed generation of state factories. As described herein, this family can have the associated symplectic transformation $S = \mathrm{diag}\left[\alpha, \frac{1}{\alpha}\right]$ for $\alpha \in \mathbb{R}$. Non-ideal rectangular GKP states can be modelled by ideal square GKP states followed first by S and then by Gaussian random noise. As described herein, the channel can be characterized in the *X/Y* matrix picture of the Gaussian CP maps through $X = I$ and $Y = \Sigma$, the latter being covariance matrix associated with the channel. Suppose, for example, that the noise between *q* and *p* quadratures is uncorrelated. In this case,

$$\Sigma = \begin{bmatrix} \epsilon_q & 0 \\ 0 & \epsilon_p \end{bmatrix},$$

where $\varepsilon_{q(p)}$ is the *q(p)* quadrature variance of each of the (infinitely or substantially many) GKP peaks in the model.

It can be important to align the GRN model of GKP states with the figures of merit often used for GKP state preparation, namely the *effective squeezing.* For a fair comparison, a value of effective squeezing can be cited with respect to a particular lattice spacing, namely the sensor state lattice (as resolvability can be important: having low per-peak variance is, for example, negated by having the peaks close together). Suppose an initial state $\hat{S}|\varnothing\rangle$ with some amount of effective squeezing, $\sigma_\alpha^2$, relative to its lattice. The amount of squeezing can be modeled using the Gaussian random noise model relative to the sensor state lattice by starting with

$$\Sigma_\alpha = \begin{bmatrix} \sigma_{\alpha,q}^2 & 0 \\ 0 & \sigma_{\alpha,p}^2 \end{bmatrix},$$

and then undoing $\hat{S}$ through a fictitious measurement-based squeezer - that is:

$$\Sigma_\alpha \to (S^{-1})\Sigma_\alpha(S^{-1})^T = \begin{bmatrix} \dfrac{1}{\alpha^2}\sigma_{\alpha,q}^2 & 0 \\ 0 & \alpha^2\sigma_{\alpha,p}^2 \end{bmatrix}.$$

Therefore, states emerging from the state factory can be interpreted as sensor states followed by GRN with covariance $\Sigma$, as described further herein.

## Noise in Dumbbell-Splitter Reconstructions with Bipartite Cluster States

Analysis described herein can lead to a requirement and/or feature that there exists $A$-type and $B$-type macronodes that form a bipartition. Each measurement in macronode $A$ can be preceded by an effective Gaussian noise channel $\varepsilon_A = U^\dagger \varepsilon U$, while each measurement in macronode $B$ can be preceded by $\varepsilon_B = \hat{F}\hat{U}^\dagger \varepsilon \hat{U}F^\dagger$. Starting from the initial noise covariance matrix $\Sigma$, based on the above, the pre-measurement covariance matrices become

$$\Sigma_A = S_U^{-1}\Sigma(S_U^{-1})^T \qquad \Sigma_B = S_F S_U^{-1}\Sigma(S_U^{-1})^T S_F^T.$$

In the case of rectangular GKPs, $\Sigma_\alpha$ can be propagated using this expression to obtain:

$$\Sigma_A = \begin{bmatrix} \epsilon_q/\alpha^2 & 0 \\ 0 & \alpha^2\epsilon_p \end{bmatrix} \equiv \begin{bmatrix} \epsilon_q' & 0 \\ 0 & \epsilon_p' \end{bmatrix} \qquad \Sigma_B = \begin{bmatrix} \alpha^2\epsilon_p & 0 \\ 0 & \epsilon_q/\alpha^2 \end{bmatrix} = \begin{bmatrix} \epsilon_p' & 0 \\ 0 & \epsilon_q' \end{bmatrix}.$$

The form of the covariance matrices can suggest that the effective noise for both macronodes can depend only on the effective squeezing relative to the sensor state lattice, as long as the initial GRN covariances correspond to the pre-transformed effective squeezing values $\sigma_{\alpha,q}^2, \sigma_{\alpha,p}^2$, which is justified by the model described above. Suggestively, because of the Fourier transforms on macronodes $B$, the noise along each quadrature depends on the initial noise along the *opposite* quadratures. This characteristic leads to the following feature:

Suppose an example architecture of:

**(a)** uniformly rectangular GKP states with uniform, anisotropic, uncorrelated Gaussian random noise;

**(b)** dumbbell-splitter passive constructions; and

**(c)** a cluster state with a primal/dual bipartition.

Then, the phase error rates associated with $X$ measurements along the primal nodes depend only on the noise along a single quadrature of the input states, and those along the dual nodes depend on noise along the other quadrature. Dependency of the phase error rates on the noise along particular quadratures should be taken into account. As described above, effective $X$ measurements on a particular macronode can be performed by binning the homodyne outcomes of central modes (measured in $p$) and satellite modes of the neighbours (measured in $q$). Associating bipartition $A$ with primal modes and bipartition $B$ with dual modes, $\Sigma_A$ (see the lower-right entry) above can suggest that a $p$ measurement on the central modes in $A$ depends only on the noise along $p$. Since every neighbour of a *mode A* is a mode in $B$, a $q$ measurement in $B$ depends only on noise along $p$ (see the upper-left entry in $\Sigma_B$). Thus, the feature described above is satisfied for the primal modes. The argument is symmetrical for dual modes, where the errors depend only along the noise in $q$.

## Consequences of Primal / Dual p/q Noise Decoupling

For the purpose of illustration, a state factory can produce GKP states with q-p bias - either noisier in one quadrature or another. This bias can be compensated for through a judicious choice of the outer (qubit) error-correcting code. For example, in some embodiments this compensation can be achieved through the rectangular surface code with a varying aspect ratio - a "knob" that affects tolerance to primal and dual error rates. Given a particular physical noise bias, a required aspect ratio can be predicted. In some alternative embodiments, an aspect ratio of a biased CSS code other than the rectangular surface code (e.g., color code) can be adjusted to achieve this compensation. In some further alternative embodiments, the $X$ and $Z$ distances of any code with variable $X$ and $Z$ distances can be adjusted to achieve this compensation.

### Incorporating Squeezed States

Squeezed states can be modeled as GKP states followed by highly asymmetric GRN with covariance

$$\Sigma_p = \begin{bmatrix} 1/\epsilon_p & 0 \\ 0 & \epsilon_p \end{bmatrix}.$$

Supposing the validity of this model, the aspects described above for the primal/dual error rate splitting can be favourably applied to an architecture with squeezed states (e.g., assuming that all the states are squeezed under the homogeneity condition). In other words, the extra Fourier transform on half of the modes means that phase errors for those modes can uniquely be a function of $1/\varepsilon_p$, and of $\varepsilon_p$ for the remaining modes.

### Tuning Bias through Extra Gates

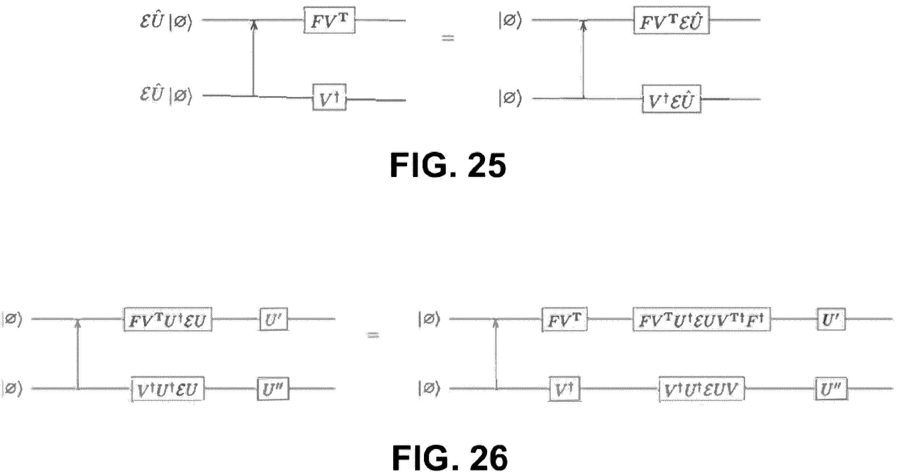

By introducing an additional gate after the dumbbell during state preparation, additional tuning of the bias in a noise channel can be facilitated. Starting, for example, with the standard dumbbell input described herein, but also including an additional gate, $\hat{V} = \hat{R}(\theta_1)\hat{S}(s)\hat{R}(\theta_2)$, and after the dumbbell stitch (e.g., as performed by a two-mode stitcher), $\hat{V}^T$ can be applied to the top mode and $\hat{V}^\dagger$ to the bottom mode, as shown in FIG. 25, where $\hat{V}^\dagger = \hat{R}(-\theta_2)\hat{S}^\dagger(s)\hat{R}(-\theta_1)$ and $\hat{V}^T = \hat{R}(\theta_2)\hat{S}^\dagger(s)\hat{R}(\theta_1)$.

It can be assumed (e.g., for the purpose of illustration) that passing these operators and channels through a stitcher can be performed so that the effect that the additional operator has on the Gaussian noise channel can be analyzed. To further that analysis, it can also be assumed that a measurement pattern can be chosen to negate the operator $\hat{U}$, as described herein.

First, $\hat{U}$ can be pushed through the noise channel and $\hat{V}$, and can be sent on to the measurements, as described herein. Then, the Fourier transform can be pushed back to the input state and reduced to a dumbbell, as shown in FIG. 26, where $\hat{U}' = \hat{F}\hat{V}^T\hat{U}\hat{V}^{T\dagger}\hat{F}^\dagger$ and $\hat{U}'' = \hat{V}^\dagger\hat{U}\hat{V}$.

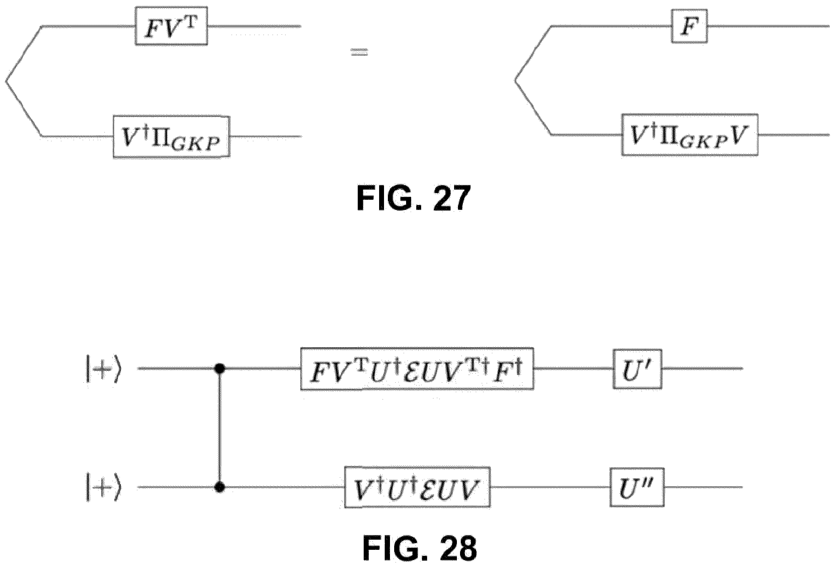

As the dumbbell is turned into a two-mode GKP cluster state, it can be desirable to bounce $\hat{V}^T$ to cancel out the $\hat{V}^\dagger$. There are certain conditions that can be placed on $\hat{V}^T$ to do so. First, the two qunaughts can be converted through a beamsplitter into an EPR state and a GKP projector, and then $\hat{V}^T$ can be bounced to the other side, shown in FIG. 27.

At this point, for the $V$s to cancel each other out, $\hat{V}$ can be a valid GKP logical gate. This characteristic can allow $\hat{V}$ to commute with $\hat{\Pi}_{GKP}$ and cancel with $\hat{V}^\dagger$. Plugging this input state back into the circuit shown in FIG. 27, the circuit shown in FIG. 28 results.

Thus, the noise bias can be tuned with this additional operator, $\hat{V}$. With the additional restrictions of $\hat{V}$ being a GKP logical gate and being experimentally accessible (i.e., a Clifford gate), possible primitive gates (or the only possible primitive gates) that can be applied are Fourier transforms $\hat{F}$ (which correspond to or are associated with a Hadamard gate $\hat{H}$) or a CV shear of odd weight, $\hat{P}(\pm 1)$ (which corresponds to or is associated with the phase gate $\hat{P}$). Any other gate generated by the two foregoing gates can also be applied.

### Example 1: An extra Fourier

For the purpose of illustration, setting $\hat{V}^T = \hat{F}^\dagger$, an extra Fourier transform on macronodes $A$ rather than $B$ can be obtained. This extra Fourier transform can allow, for example, a flip of the $q/p$ decoupling between primal and dual error rates discussed above. Alternatively or in addition, the Fourier transform can be bounced on dumbbell creation to obtain the same or similar result.

### Example 2: Phase gate

For the purpose of illustration, $\hat{V} = \hat{P}^T(\pm 1)$. Suppose that $U^\dagger \varepsilon U$ is uncorrelated (which can occur for rectangular GKPs followed by uncorrelated GRN). The covariance matrix $\Sigma'$ associated with $U^\dagger \varepsilon U$ would then transform, under the phase gate, via:

$$\Sigma' = \begin{bmatrix} \epsilon'_q & 0 \\ 0 & \epsilon'_p \end{bmatrix} \to \hat{S}_P^{-1}\Sigma'(S_P^{-1})^T = \begin{bmatrix} \epsilon'_q & \pm\epsilon'_q \\ \pm\epsilon'_q & \epsilon'_q + \epsilon'_p \end{bmatrix}.$$

Thus, the phase gate can have the effect of correlating the diagonal covariance matrix. This property can be used to uncorrelate correlated noise.

**Fault Tolerance of Rectangular and Hexagonal GKPs with Anisotropic Noise**

Described below is an implementation of fault-tolerant simulation of rectangular and hexagonal GKP states with anisotropic noise.

As described above, non-square GKP lattices can be obtained by a Gaussian unitary, $\hat{U}$, which can be a matrix and/or equivalent to a Gaussian unitary matrix. By convention, $\hat{U}$ can be associated with the transformation *from* square-grid GKP states *to* the desired lattice, that is:

$$\widehat{U}|\psi\rangle_{\text{square GKP}} = |\psi\rangle_{\text{other GKP}}.$$

The symplectic matrix for the rectangular GKP lattice transformation is;

$$S_{\text{rect.}} = \begin{bmatrix} \alpha & 0 \\ 0 & \dfrac{1}{\alpha} \end{bmatrix} = \text{diag}(\alpha, 1/\alpha).$$

**Modified Simulations**

As described above, there can exist *A*-type and *B*-type macronodes that form a bipartition. Each measurement in macronode *A* can be preceded by an effective Gaussian noise channel $\varepsilon_a = U^\dagger \varepsilon U$, while each measurement in macronode *B* can be preceded by $\varepsilon_B = \hat{F}\hat{U}^\dagger_\varepsilon\hat{U}\hat{F}^\dagger$. Starting from the initial noise covariance matrix $\Sigma$, this property can mean the pre-measurement covariance matrices become

$$\Sigma_A = S_U^{-1}\Sigma(S_U^{-1})^T \qquad \Sigma_B = S_F S_U^{-1}\Sigma(S_U^{-1})^T S_F^T.$$

In the case of rectangular GKPs, $\Sigma_\alpha$ can be propagated using this expression to obtain:

$$\Sigma_A = \begin{bmatrix} \epsilon_q/\alpha^2 & 0 \\ 0 & \alpha^2\epsilon_p \end{bmatrix} \equiv \begin{bmatrix} \epsilon_q' & 0 \\ 0 & \epsilon_p' \end{bmatrix} \qquad \Sigma_B = \begin{bmatrix} \alpha^2\epsilon_p & 0 \\ 0 & \epsilon_q/\alpha^2 \end{bmatrix} = \begin{bmatrix} \epsilon_p' & 0 \\ 0 & \epsilon_q' \end{bmatrix}.$$

Thus, instead of sampling from a single covariance matrix in every mode to simulate noisy homodyne outcomes, $\Sigma_{A(B)}$ can be sampled for modes in macronodes $A(B)$. $A(B)$ can be associated with the primal (dual) modes of a foliated CSS code, for example, and/or vice versa. Note that the case where $\alpha \neq 1$ and $\varepsilon_q = \varepsilon_p$ corresponds to rectangular GKP states with isotropic noise. However, as suggested by the expressions above for $\Sigma_A$ and $\Sigma_B$ and by taking into account the aforementioned measurement pattern that simulates the desired measurement on a cluster state constructed with square-lattice GKP states, such rectangular GKP states with isotropic noise can be effectively mapped to square GKP states with anisotropic noise.

**Results**

Rectangular Surface Codes with Rectangular GKP States

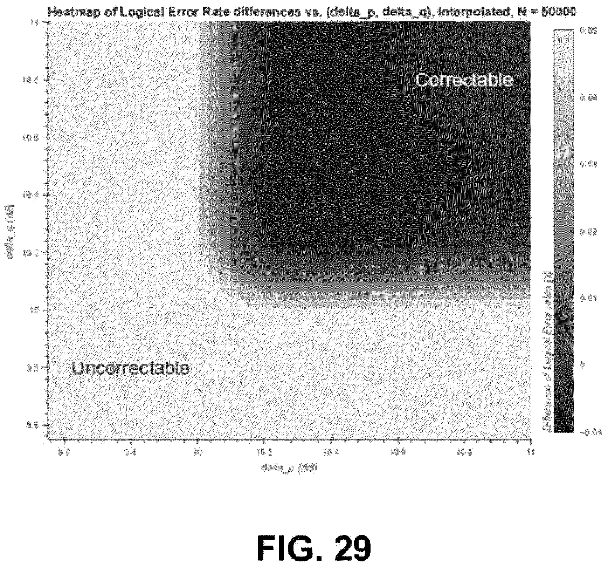

The noise model can be implemented and simulated in FlamingPy, and/or the like. For the purpose of illustration, the linear splitter stitcher, the standard GKP binning function as the inner decoder, and the foliated rectangular surface code for the qubit quantum error correcting code can be considered. Instead of a single physical noise parameter $\delta = \delta_p = \delta_q$ for which a threshold is searched for, logical error rates can be plotted as a function of both $\delta_p$ and $\delta_q$ to obtain a two-dimensional (2D) threshold plot as shown in FIG. 29. More specifically, FIG. 29 shows the difference between logical error rates of high- and low-distance codes as a function of physical error parameters, delta_q ($\delta_q$) and delta_p ($\delta_p$), governing the Gaussian random noise in the q and *p* quadratures, respectively, on top of ideal GKP states. A difference of 0, less than 0, and greater than 0 correspond to the threshold contour, correctable region (darker shade) and uncorrectable region (lighter shade), respectively. FIG. 29 is drawn for a square surface code (e.g., having an aspect ratio of 1).

While some simulations described herein can be performed for rectangular GKP states and rectangular surface codes, some alternative embodiments can include square GKP states with anisotropic noise, where the anisotropic noise can be accommodated by adjusting the aspect ratio of the rectangular surface code. Some further alternative embodiments may in general include GKP states, either square or non-square (e.g., rectangular, hexagonal), with anisotropic noise and an error-correcting code in which the *X* and *Z* distances are adjustable to accommodate the anisotropic noise. As described above, rectangular GKP states with isotropic noise can be effectively mapped to square GKP states with anisotropic noise. Therefore, in some embodiments, the *X* and *Z* distances of an error-correcting code can be adjusted to accommodate non-square GKP states with isotropic noise. Indeed, the flexibility of the methods and systems described herein can be advantageous in accommodating a wide range of GKP states with noise that may or may not be equal in conjugate quadratures.

Symmetric effective squeezing

Symmetric effective squeezing is an operational figure of merit for GKP Bell pairs. Constructing a GKP Bell pair from sensor states involves taking two sensor states (i.e., GKP states with peak spacing in *q* of $\sqrt{2\pi}$), rotating one of them by $\pi/2$ (i.e., a phase rotation), and then passing both sensor states through a 50:50 beamsplitter. For a candidate GKP sensor state $\rho_o$ with asymmetric effective squeezing in *q* and *p* (after aligning the original lattice to the sensor state lattice), two copies of that sensor state can be passed through the GKP Bell pair generation circuit. One copy of the sensor state can then be measured and traced out. If the candidate GKP sensor states were high-quality sensor states (and therefore should have made a good GKP Bell pair), the remaining mode will approach the maximally mixed qubit state along the square lattice, which should be close to satisfying the GKP square lattice qubit stabilizers.

The stabilizer expectation values for the remaining half of the approximate Bell pair $\rho_1$ can then be determined from the homodyne measurements of the candidate sensor state $\rho_o$. For the square lattice qubit, the stabilizer operators are $\left( D\left(\sqrt{2\pi}\right), D\left(i\sqrt{2\pi}\right) \right)$:

$$
\begin{aligned}
\langle S_{\sqrt{2\pi}}\rangle_\rho &= \mathrm{Tr}_1\left[\widehat{D}_1\left(\sqrt{2\pi}\right)\rho_1\right] \\
&= \mathrm{Tr}_1\left[\widehat{D}_1\left(\sqrt{2\pi}\right)\mathrm{Tr}_2\left[U_{\mathrm{BS}}R_2\left(\frac{\pi}{2}\right)\rho_o \otimes \rho_o R_2^\dagger\left(\frac{\pi}{2}\right)U_{\mathrm{BS}}^\dagger\right]\right] \\
&= \mathrm{Tr}_{12}\left[\widehat{D}_1\left(\sqrt{2\pi}\right)U_{\mathrm{BS}}R_2\left(\frac{\pi}{2}\right)\rho_o \otimes \rho_o R_2^\dagger\left(\frac{\pi}{2}\right)U_{\mathrm{BS}}^\dagger\right] \\
&= \mathrm{Tr}_{12}\left[R_2^\dagger\left(\frac{\pi}{2}\right)U_{\mathrm{BS}}^\dagger\widehat{D}_1\left(\sqrt{2\pi}\right)U_{\mathrm{BS}}R_2\left(\frac{\pi}{2}\right)\rho_o \otimes \rho_o\right] \\
&= \mathrm{Tr}_{12}\left[\widehat{D}_1\left(\sqrt{\pi}\right)\widehat{D}_2\left(i\sqrt{\pi}\right)\rho_o \otimes \rho_o\right] \\
&= \langle S_{\sqrt{\pi}}\rangle_{\rho_o}\langle S_{i\sqrt{\pi}}\rangle_{\rho_o},
\end{aligned}
$$

where *D* is a displacement, *R* is a phase rotation, and $U_{\mathrm{BS}}$ is a beamsplitter unitary. Similarly:

$$
\langle S_{i\sqrt{2\pi}}\rangle_\rho = \langle S_{\sqrt{\pi}}\rangle_{\rho_o}\langle S_{i\sqrt{\pi}}\rangle_{\rho_o}.
$$

For the half of the approximate Bell pair, the stabilizer expectation values in q and p are equal to each other by construction. These stabilizer expectation values can be computed by taking the product of the sensor state stabilizer expectation values of the approximate sensor state used to construct the approximate Bell pair. The symmetric effective squeezing can then be defined as the effective squeezing of one half of the Bell pair with respect to the square lattice:

$$
\sigma_{\mathrm{sym}}^2 = \frac{1}{2\pi}\log\left(\frac{1}{\left|\langle S_{\sqrt{\pi}}\rangle_{U_{\mathrm{G}}\rho U_{\mathrm{G}}^\dagger}\right|^2\left|\langle S_{i\sqrt{\pi}}\rangle_{U_{\mathrm{G}}\rho U_{\mathrm{G}}^\dagger}\right|^2}\right).
$$

For example, to compare a first sensor state with 10 dB of effective squeezing in both quadratures with a second sensor state that has 9 dB in *q* and 11 dB in *p* of effective squeezing, their respective symmetric effective squeezing values can be used. The first sensor state corresponds to $\langle S_{\sqrt{\pi}}\rangle = \langle S_{i\sqrt{\pi}}\rangle \approx 0.854$, which corresponds to a symmetric effective squeezing of 10 dB. The second sensor state corresponds to $\langle S_{\sqrt{\pi}} \rangle \approx 0.882, \langle S_{i\sqrt{\pi}} \rangle \approx 0.821$, which corresponds to a symmetric effective squeezing of 9.88 dB. Accordingly, the first sensor state can be identified as being of a higher quality than the second sensor state.

In some embodiments, a method includes receiving, at a state preparation circuit, a plurality of Gottesman-Kitaev-Preskill (GKP) states of light that is representable by a plurality of lattices. The method also includes applying a transformation to the plurality of GKP states of light, using at least one of a first beamsplitter, a measurement-based squeezer, or a phase shifter that are included in the state preparation circuit, to produce a plurality of aligned GKP states of light that is representable by a common non-square lattice (e.g., at least one of a rectangular lattice or a hexagonal lattice). The method also includes entangling two aligned GKP states of light from the plurality of aligned GKP states of light, using a second beamsplitter that is included in a two-mode stitcher that is coupled to the state preparation circuit, to produce a two-mode GKP cluster state. The method also includes entangling a plurality of first modes, including a first mode from the two-mode GKP cluster state, and a plurality of second modes, including a second mode from the two-mode GKP cluster state, using a third beamsplitter that is included in a macronodal stitcher that is coupled to the two-mode stitcher, to produce a macronodal cluster state.

In some implementations, the transformation includes a Gaussian unitary transformation, and the method also includes receiving, at a quantum processing unit (QPU) coupled to the macronodal stitcher, the plurality of first modes and the plurality of second modes. The method can also include performing, via the QPU, a first homodyne measurement of a first mode of the macronodal cluster state based on a transformation matrix associated with the Gaussian unitary transformation, and performing, via the QPU, a second homodyne measurement of a second mode of the macronodal cluster state based on the transformation matrix and a Fourier transformation.

In some implementations, the state preparation circuit includes a breeding circuit, and the method also includes receiving, at the breeding circuit, a plurality of initial states of light. The method can also include entangling the plurality of initial states of light, using a plurality of beamsplitters that is included in the breeding circuit, to produce the plurality of GKP states of light that is representable by the plurality of lattices. The plurality of initial states of light can include at least one of a squeezed state, a cat state, or a 3-peak state, produced by at least one of a Gaussian boson sampling device or one or more squeezed light sources.

In some implementations, the macronodal cluster state is reducible to a bipartite graph state that is representable by a three-dimensional macronodal lattice structure in one temporal dimension and two spatial dimensions.

In some implementations, the common non-square lattice is a rectangular lattice, a GKP $X$ measurement based on one or more homodyne measurements of the plurality of first modes has a first phase error that is based on a noise of a first quadrature that is associated with the plurality of GKP states, and a GKP $X$ measurement based on one or more homodyne measurements of the plurality of second modes has a second phase error that is based on a noise of a second quadrature that is (1) associated with the plurality of GKP states and (2) conjugate the first quadrature.

The macronodal cluster state can be associated with a code having $X$ and $Z$ distances, and the $X$ and $Z$ distances can be based on the first phase error and the second phase error.

Alternatively, the macronodal cluster state can be associated with a rectangular surface code, and an aspect ratio of the rectangular surface code is based on the first phase error and the second phase error.

In some implementations, the macronodal stitcher includes a beamsplitter network that includes at least one of a $2^N$-splitter, a linear splitter, or a tree splitter, and the macronodal cluster state comprises macronodes, each macronode having a size that is based on a number of input modes to the beamsplitter network.

In some embodiments, a system includes an optical circuit, a state preparation circuit, a two-mode stitcher, and a quantum processing unit (QPU). The optical circuit is configured to generate a plurality of initial states of light via Gaussian boson sampling (GBS). The state preparation circuit includes at least one of a first beamsplitter, a measurement-based squeezer, or a phase shifter and that is configured to at least one of (1) generate a plurality of Gottesman-Kitaev-Preskill (GKP) states of light based on the plurality of initial states of light or (2) perform a Gaussian unitary transformation on the plurality of GKP states of light to align the plurality of GKP states of light to an arbitrary lattice. The two-mode stitcher is coupled to the state preparation circuit and that includes a second beamsplitter and that is configured to generate a plurality of two-mode GKP cluster states based on the plurality of GKP states of light. The QPU is (1) coupled to the state preparation circuit, (2) configured to generate a macronodal cluster state, via a third beamsplitter, based on the plurality of two-mode GKP cluster states, and (3) configured to perform a homodyne detection based on the macronodal cluster state and the arbitrary lattice.

In some implementations, the arbitrary lattice is at least one of a rectangular lattice or a hexagonal lattice.

In some implementations, the macronodal cluster state includes (1) a plurality of first modes from the plurality of two-mode GKP cluster states and (2) a plurality of second modes from the plurality of two-mode GKP cluster states. The homodyne detection includes (1) a first modification that is associated with the plurality of first modes and that is based on a matrix that is associated with the Gaussian unitary transformation and (2) a second correction that is associated with the plurality of second modes and that is based on the matrix and a Fourier transformation.

In some implementations, the third beamsplitter is included in a plurality of beamsplitters that is associated with at least one of a $2^N$-splitter, a linear splitter, or a tree splitter.

In some implementations, the macronodal cluster state is representable by a three-dimensional macronodal lattice structure in one temporal dimension and two spatial dimensions.

In some embodiments, an apparatus includes an integrated circuit that includes at least one of a first beamsplitter, a measurement-based squeezer, or a phase shifter and that is configured to at least one of (1) generate a plurality of Gottesman-Kitaev-Preskill (GKP) states of light based on a plurality of initial states of light generated via Gaussian boson sampling (GBS), or (2) perform a Gaussian unitary transformation on the plurality of GKP states of light to align the plurality of GKP states of light to an arbitrary lattice. The integrated circuit also includes a two-mode stitcher that includes a second beamsplitter and that is configured to generate a plurality of two-mode GKP cluster states based on the plurality of GKP states of light. The two-mode stitcher is configured to send the plurality of two-mode GKP cluster states to a quantum processing unit (QPU) (1) that is configured to generate a macronodal cluster state, via a third beamsplitter, based on the plurality of two-mode GKP cluster states and (2) that is configured to perform a homodyne detection based on the macronodal cluster state and the arbitrary lattice.

In some implementations, the integrated circuit is a first integrated circuit, and the apparatus also includes at least one of: a second integrated circuit that includes the QPU, or a third integrated circuit that includes an optical circuit configured to generate the plurality of initial states of light via GBS.

In some embodiments, a method includes receiving, at a two-mode stitcher, two Gottesman-Kitaev-Preskill (GKP) states of light from a plurality of GKP states of light that is representable by a common lattice. The method also includes entangling the two GKP states of light, using a plurality of beamsplitters that is included in the two-mode stitcher, to produce a two-mode GKP cluster state. The method also includes entangling (1) a plurality of first modes that includes a first mode from the two-mode GKP cluster state and (2) a plurality of second modes that includes a second mode from the two-mode GKP cluster state, using a second plurality of beamsplitters that is included in a macronodal stitcher that is coupled to the two-mode stitcher, to produce a macronodal cluster state that is associated with a code having an $X$ distance and a $Z$ distance that are based on (1) a noise of a first quadrature that is associated with the plurality of GKP states and (2) a noise of a second quadrature that is associated with the plurality of GKP states.

In some implementations, the common lattice is a square lattice or a non-square lattice, and the noise of the first quadrature and the noise of the second quadrature are associated with anisotropic noise.

In some implementations, the common lattice is a rectangular lattice, and the noise of the first quadrature and the noise of the second quadrature are associated with isotropic noise. The method can also include generating a representation of the plurality of GKP states of light based on a map associated with the rectangular lattice and the isotropic noise, the representation of the plurality of GKP states being associated with a common square lattice and anisotropic noise, and defining at least one of the $X$ distance or the $Z$ distance based on the representation of the plurality of GKP states.

While various embodiments have been described and illustrated herein, a variety of other means and/or structures for performing the function and/or obtaining the results and/or one or more of the advantages described herein, and each of such variations and/or modifications are possible. More generally, all parameters, dimensions, materials, and configurations described herein are meant to be examples and that the actual parameters, dimensions, materials, and/or configurations will depend upon the specific application or applications for which the disclosure is used. It is to be understood that the foregoing embodiments are presented by way of example only and that other embodiments may be practiced otherwise than as specifically described and claimed. Embodiments of the present disclosure are directed to each individual feature, system, article, material, kit, and/or method described herein. In addition, any combination of two or more such features, systems, articles, materials, kits, and/or methods, if such features, systems, articles, materials, kits, and/or methods are not mutually inconsistent, is included within the inventive scope of the present disclosure.

Also, various concepts may be embodied as one or more methods, of which an example has been provided. The acts performed as part of the method may be ordered in any suitable way. Accordingly, embodiments may be constructed in which acts are performed in an order different than illustrated, which may include performing some acts simultaneously, even though shown as sequential acts in illustrative embodiments.

All definitions, as defined and used herein, should be understood to control over dictionary definitions, definitions in documents incorporated by reference, and/or ordinary meanings of the defined terms.

As used herein, a "module" can be, for example, any assembly and/or set of operatively-coupled electrical components associated with performing a specific function, and can include, for example, a memory, a processor, electrical traces, optical connectors, software (stored and executing in hardware) and/or the like.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of," or, when used in the claims, "consisting of," will refer to the inclusion of exactly one element of a number or list of elements. In general, the term "or" as used herein shall only be interpreted as indicating exclusive alternatives (i.e. "one or the other but not both") when preceded by terms of exclusivity, such as "either," "one of," "only one of," or "exactly one of." "Consisting essentially of," when used in the claims, shall have its ordinary meaning as used in the field of patent law.

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

In the claims, as well as in the specification above, all transitional phrases such as "comprising," "including," "carrying," "having," "containing," "involving," "holding," "composed of," and the like are to be understood to be open-ended, i.e., to mean including but not limited to. Only the transitional phrases "consisting of" and "consisting essentially of" shall be closed or semi-closed transitional phrases, respectively, as set forth in the United States Patent Office Manual of Patent Examining Procedures, Section 2111.03.

**Claims**

1.    A method, comprising:

receiving, at a state preparation circuit, a plurality of Gottesman-Kitaev-Preskill (GKP) states of light that is representable by a plurality of lattices;
applying a transformation to the plurality of GKP states of light, using at least one of a first beamsplitter, a measurement-based squeezer, or a phase shifter that are included in the state preparation circuit, to produce a plurality of aligned GKP states of light that is representable by a common non-square lattice;
entangling two aligned GKP states of light from the plurality of aligned GKP states of light, using a second beamsplitter that is included in a two-mode stitcher that is coupled to the state preparation circuit, to produce a two-mode GKP cluster state; and
entangling a plurality of first modes, including a first mode from the two-mode GKP cluster state, and a plurality of second modes, including a second mode from the two-mode GKP cluster state, using a third beamsplitter that is included in a macronodal stitcher that is coupled to the two-mode stitcher, to produce a macronodal cluster state.

2.    The method of claim 1, wherein the transformation includes a Gaussian unitary transformation, the method further comprising:

receiving, at a quantum processing unit (QPU) coupled to the macronodal stitcher, the plurality of first modes and the plurality of second modes;
performing, via the QPU, a first homodyne measurement of a first mode of the macronodal cluster state based on a transformation matrix associated with the Gaussian unitary transformation; and
performing, via the QPU, a second homodyne measurement of a second mode of the macronodal cluster state based on the transformation matrix and a Fourier transformation.

3. The method of claim 1 or claim 2, wherein the common non-square lattice is at least one of a rectangular lattice or a hexagonal lattice.

4. The method of any of the preceding claims, wherein the state preparation circuit includes a breeding circuit, the method further comprising:

receiving, at the breeding circuit, a plurality of initial states of light; and
entangling the plurality of initial states of light, using a plurality of beamsplitters that is included in the breeding circuit, to produce the plurality of GKP states of light that is representable by the plurality of lattices.

5. The method of claim 4, wherein the plurality of initial states of light includes at least one of a squeezed state, a cat state, or a 3-peak state, produced by at least one of a Gaussian boson sampling device or one or more squeezed light sources.

6. The method of any of the preceding claims, wherein the macronodal cluster state is reducible to a bipartite graph state that is representable by a three-dimensional macronodal lattice structure in one temporal dimension and two spatial dimensions.

7. The method of any of the preceding claims, wherein:

the common non-square lattice is a rectangular lattice;
a GKP $X$ measurement based on one or more homodyne measurements of the plurality of first modes has a first phase error that is based on a noise of a first quadrature that is associated with the plurality of GKP states; and
a GKP $X$ measurement based on one or more homodyne measurements of the plurality of second modes has a second phase error that is based on a noise of a second quadrature that is (1) associated with the plurality of GKP states and (2) conjugate the first quadrature.

8. The method of claim 7, wherein at least one of:

(i) the macronodal cluster state is associated with a code having $X$ and $Z$ distances that are based on the first phase error and the second phase error, or
(ii) the macronodal cluster state is associated with a rectangular surface code, an aspect ratio of the rectangular surface code based on the first phase error and the second phase error.

9. The method of any of the preceding claims, wherein:

the macronodal stitcher includes a beamsplitter network;
the beamsplitter network includes at least one of a $2^N$-splitter, a linear splitter, or a tree splitter; and
the macronodal cluster state comprises macronodes, each macronode having a size that is based on a number of input modes to the beamsplitter network.

10. A system, comprising:

an optical circuit configured to generate a plurality of initial states of light via Gaussian boson sampling (GBS);
a state preparation circuit that includes at least one of a first beamsplitter, a measurement-based squeezer, or a phase shifter and that is configured to at least one of (1) generate a plurality of Gottesman-Kitaev-Preskill (GKP) states of light based on the plurality of initial states of light or (2) perform a Gaussian unitary transformation on the plurality of GKP states of light to align the plurality of GKP states of light to an arbitrary lattice;
a two-mode stitcher that is coupled to the state preparation circuit and that includes a second beamsplitter and that is configured to generate a plurality of two-mode GKP cluster states based on the plurality of GKP states of light; and
a quantum processing unit (QPU) that is (1) coupled to the state preparation circuit, (2) configured to generate a macronodal cluster state, via a third beamsplitter, based on the plurality of two-mode GKP cluster states, and (3) configured to perform a homodyne detection based on the macronodal cluster state and the arbitrary lattice.

11. The system of claim 10, wherein the arbitrary lattice is at least one of a rectangular lattice or a hexagonal lattice.

12. The system of claim 10 or claim 11, wherein:

the macronodal cluster state includes (1) a plurality of first modes from the plurality of two-mode GKP cluster states and (2) a plurality of second modes from the plurality of two-mode GKP cluster states;

the macronodal cluster state is representable by a three-dimensional macronodal lattice structure in one temporal dimension and two spatial dimensions; and

the homodyne detection includes (1) a first modification that is associated with the plurality of first modes and that is based on a matrix that is associated with the Gaussian unitary transformation and (2) a second correction that is associated with the plurality of second modes and that is based on the matrix and a Fourier transformation.

13. The system of any of claims 10 to 12, wherein one of:

the third beamsplitter is included in a plurality of beamsplitters that is associated with at least one of a $2^N$-splitter, a linear splitter, or a tree splitter.

14. An apparatus, comprising:

an integrated circuit that includes at least one of a first beamsplitter, a measurement-based squeezer, or a phase shifter and that is configured to at least one of (1) generate a plurality of Gottesman-Kitaev-Preskill (GKP) states of light based on a plurality of initial states of light generated via Gaussian boson sampling (GBS), or (2) perform a Gaussian unitary transformation on the plurality of GKP states of light to align the plurality of GKP states of light to an arbitrary lattice; and

the integrated circuit further including a two-mode stitcher that includes a second beamsplitter and that is configured to generate a plurality of two-mode GKP cluster states based on the plurality of GKP states of light,

the two-mode stitcher configured to send the plurality of two-mode GKP cluster states to a quantum processing unit (QPU) (1) that is configured to generate a macronodal cluster state, via a third beamsplitter, based on the plurality of two-mode GKP cluster states and (2) that is configured to perform a homodyne detection based on the macronodal cluster state and the arbitrary lattice.

15. The apparatus of claim 14, wherein the integrated circuit is a first integrated circuit, the apparatus further comprising at least one of:

a second integrated circuit that includes the QPU; or

a third integrated circuit that includes an optical circuit configured to generate the plurality of initial states of light via GBS.

**FIG. 1**

FIG. 2

FIG. 3

FIG. 4

EP 4 664 367 A1

**FIG. 5**

EP 4 664 367 A1

FIG. 6

FIG. 7

FIG. 8

**FIG. 9**

**FIG. 10**

EP 4 664 367 A1

**FIG. 11**

**FIG. 12**

**FIG. 13**

**FIG. 14**

**FIG. 15**

EP 4 664 367 A1

FIG. 16

EP 4 664 367 A1

FIG. 17

FIG. 18

FIG. 19

FIG. 20

FIG. 21

**FIG. 22**

FIG. 23

FIG. 24

FIG. 25

FIG. 26

EP 4 664 367 A1

**FIG. 27**

**FIG. 28**

Heatmap of Logical Error Rate differences vs. (delta_p, delta_q), Interpolated, N = 50000

Correctable

Uncorrectable

Difference of Logical Error rates (z)

delta_p (dB)

delta_q (dB)

FIG. 29

Europäisches
Patentamt
European
Patent Office
Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 11 341 428 B2 (XANADU QUANTUM TECH INC [CA]) 24 May 2022 (2022-05-24) | 1,3-11, 13-15 | INV.<br>G06N10/70<br>G06N10/40<br>G06N10/20 |
| A | * column 1 - column 22 *<br>* column 25; figures 1-17 *<br>----- | 2,12 | |
| X | ILAN TZITRIN ET AL: "Fault-tolerant quantum computation with static linear optics",<br>ARXIV.ORG,<br>9 April 2021 (2021-04-09), XP081933785, | 1,3-11, 13-15 | |
| A | * page 1 - page 10 *<br>----- | 2,12 | |
| A | MATTHEW P STAFFORD ET AL: "Biased Gottesman-Kitaev-Preskill repetition code",<br>ARXIV.ORG, CORNELL UNIVERSITY LIBRARY, 201 OLIN LIBRARY CORNELL UNIVERSITY ITHACA, NY 14853,<br>1 December 2023 (2023-12-01), XP091663393,<br>DOI: 10.1103/PHYSREVA.108.052428<br>* the whole document *<br>----- | 1-15 | |
| A | FUKUI KOSUKE: "High-threshold fault-tolerant quantum computation with the Gottesman-Kitaev-Preskill qubit under noise in an optical setup",<br>PHYSICAL REVIEW A,<br>vol. 107, no. 5, 22 May 2023 (2023-05-22), XP093323811,<br>ISSN: 2469-9926, DOI: 10.1103/PhysRevA.107.052414<br>* the whole document *<br>----- | 1-15 | TECHNICAL FIELDS SEARCHED (IPC)<br><br>G06N |

-/--

The present search report has been drawn up for all claims

| Place of search | Date of completion of the search | Examiner |
|---|---|---|
| The Hague | 13 October 2025 | Cilia, Elisa |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches Patentamt
European Patent Office
Office européen des brevets

# EUROPEAN SEARCH REPORT

**Application Number**

EP 25 18 1605

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ANTHONY J BRADY ET AL: "Advances in Bosonic Quantum Error Correction with Gottesman-Kitaev-Preskill Codes: Theory, Engineering and Applications", ARXIV.ORG, CORNELL UNIVERSITY LIBRARY, 201 OLIN LIBRARY CORNELL UNIVERSITY ITHACA, NY 14853, 14 January 2024 (2024-01-14), XP091673867, DOI: 10.1016/J.PQUANTELEC.2023.100496 * the whole document * | 1-15 | |
| A | KONNO SHUNYA ET AL: "Logical states for fault-tolerant quantum computation with propagating light", SCIENCE - AUTHOR MANUSCRIPT, vol. 383, no. 6680, 19 January 2024 (2024-01-19), pages 289-293, XP093324819, US ISSN: 0036-8075, DOI: 10.1126/science.adk7560 * the whole document * | 1-15 | |
| A | VALERIO CRESCIMANNA ET AL: "Seeding Gaussian boson samplers with single photons for enhanced state generation", ARXIV.ORG, CORNELL UNIVERSITY LIBRARY, 201 OLIN LIBRARY CORNELL UNIVERSITY ITHACA, NY 14853, 4 March 2024 (2024-03-04), XP091691951, DOI: 10.1103/PHYSREVA.109.023717 * the whole document * | 1-15 | |

**TECHNICAL FIELDS SEARCHED (IPC)**

The present search report has been drawn up for all claims

| Place of search | Date of completion of the search | Examiner |
|---|---|---|
| The Hague | 13 October 2025 | Cilia, Elisa |

## ANNEX TO THE EUROPEAN SEARCH REPORT
## ON EUROPEAN PATENT APPLICATION NO.

EP 25 18 1605

This annex lists the patent family members relating to the patent documents cited in the above-mentioned European search report.
The members are as contained in the European Patent Office EDP file on
The European Patent Office is in no way liable for these particulars which are merely given for the purpose of information.

13-10-2025

| Patent document cited in search report | | Publication date | Patent family member(s) | | Publication date |
|---|---|---|---|---|---|
| US 11341428 | B2 | 24-05-2022 | AU | 2021352452 A1 | 18-05-2023 |
| | | | CA | 3195906 A1 | 07-04-2022 |
| | | | CN | 116507583 A | 28-07-2023 |
| | | | EP | 4222660 A1 | 09-08-2023 |
| | | | JP | 2023544543 A | 24-10-2023 |
| | | | US | 2022101168 A1 | 31-03-2022 |
| | | | US | 2023281499 A1 | 07-09-2023 |
| | | | WO | 2022067431 A1 | 07-04-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63659560

- US 23125925

**Non-patent literature cited in the description**

- United States Patent Office Manual of Patent Examining Procedures